# EUROPEAN PATENT APPLICATION

(11) **EP 4 576 891 A1**
(43) Date of publication of application: **25.06.2025**
(21) Application number: 22955243.5
(22) Date of filing: 15.08.2022
(51) Int. Cl.: H04W 60/00, H04W 76/10, H04L 9/40, H04W 12/06

(54) **AUTHENTICATION METHOD AND APPARATUS FOR ACCESS TO 3GPP NETWORK BY MEANS OF NON-3GPP ACCESS NETWORK**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Stöckeler, Ferdinand
(86) International application number: PCT/CN2022/112622
(87) International publication number: WO 2024/036461

(57) **Abstract**

The present disclosure relates to the technical field of communications, and provides an authentication method and apparatus for access to a 3GPP network by means of a non-3GPP access network, a device, and a storage medium. The method comprises: when a terminal device accesses a 3GPP network by means of an untrusted non-3GPP access network, according to a registration operation executed, sending to a non-3GPP interworking function (N3IWF) at least one of a registration type corresponding to the registration operation, a user identifier, and a non-public network identifier that the terminal device needs to register. The present disclosure provides a processing method for the case of "authentication for access to a 3GPP network by means of a non-3GPP access network", so as to send, according to a registration operation executed by a terminal device, information corresponding to the registration operation to a N3IWF, thereby improving the accuracy of authentication for access to the 3GPP network by means of the non-3GPP access network.

## Description

### FIELD

The present disclosure relates to the field of communication technologies, and more particularly to an authentication method and an authentication apparatus for accessing a 3rd generation partnership project (3GPP) network via a non-3GPP access network, a device and a storage medium.

### BACKGROUND

In a communication system, a terminal may access a 3GPP network through a 3GPP access network, for example. However, in the related art, the 3GPP specification does not support direct access to the 3GPP network via a non-3GPP access network. For example, a vendor-specific EAP method called extensible authentication protocol (EAP)-5th generation mobile communication technology (5G) may be used. Using an "extended" EAP type and an existing 3GPP network vendor number Vendor-Id, it is registered with the Internet assigned numbers authority (IANA) under a management information structure (SMI) private enterprise code registry. However, this authentication method does not involve registration operations performed by the terminal, which makes the authentication of accessing the 3GPP network via the non-3GPP access network less accurate.

### SUMMARY

The present disclosure provides an authentication method and an authentication apparatus for accessing a 3GPP network via a non-3GPP access network, a device and a storage medium, which may send information corresponding to a registration operation performed by a terminal to a non-3GPP interworking function (N3IWF) according to the registration operation performed by the terminal, so as to improve the accuracy of authentication of accessing the 3GPP network via the non-3GPP access network.

Embodiments of a first aspect of the present disclosure provide an authentication method for accessing a 3GPP network via a non-3GPP access network, which is performed by a terminal, and includes:

in a case that the terminal accesses the 3GPP network via an untrusted non-3GPP access network, according to a performed registration operation, sending at least one of a registration type, a user identifier and an identifier of a non-public network, that the terminal needs to register with, corresponding to the registration operation to a N3IWF.

Optionally, in an embodiment of the present disclosure, sending the user identifier corresponding to the registration operation to the N3IWF according to the performed registration operation includes:
in response to that the performed registration operation is a standalone non-public network (SNPN) onboarding registration, sending at least one of following user identifiers to the N3IWF:
an onboarding subscription concealed identifier (SUCI); and
an onboarding subscription permanent identifier (SUPI).

Optionally, in an embodiment of the present disclosure, sending the user identifier corresponding to the registration operation to the N3IWF according to the performed registration operation includes:
in response to that the performed registration operation is performing an initial registration or performing a mobile registration update, sending at least one of following user identifiers to the N3IWF:
an SUCI; and
an SUPI.

Optionally, in an embodiment of the present disclosure, sending the registration type corresponding to the registration operation to the N3IWF according to the performed registration operation includes at least one of:
in response to that the performed registration operation is performing an SNPN onboarding registration, sending a registration type to the N3IWF, in which the registration type is SNPN Onboarding;
in response to that the performed registration operation is performing an initial registration, sending a registration type to the N3IWF, in which the registration type is Initial Registration; and
in response to that the performed registration operation is performing a mobile registration update, sending a registration type to the N3IWF, in which the registration type is Mobile Registration Update.

Optionally, in an embodiment of the present disclosure, sending the user identifier corresponding to the registration operation to the N3IWF according to the performed registration operation includes:
in a non-public network (NPN) scenario, in response to that an extensible authentication protocol (EAP) method supports SUPI privacy, sending an anonymous SUCI to the N3IWF according to configuration information of the terminal.

Optionally, in an embodiment of the present disclosure, the anonymous SUCI is an anonymous SUCI obtained by ignoring a username part in an original SUCI.

Optionally, in an embodiment of the present disclosure, the anonymous SUCI is an anonymous SUCI obtained by setting a username part in an original SUCI to anonymous.

Optionally, in an embodiment of the present disclosure, the method further includes:
receiving an SUCI generation algorithm sent by the N3IWF; and
generating an SUCI according to the SUCI generation algorithm, and sending the SUCI to the N3IWF.

Optionally, in an embodiment of the present disclosure, the method further includes:
sending the SUCI to the N3IWF in response to not receiving the SUCI generation algorithm sent by the N3IWF.

Embodiments of another aspect of the present disclosure provide an authentication method for accessing a 3GPP network via a non-3GPP access network, which is performed by a N3IWF, and includes:
in a case that a terminal accesses the 3GPP network via an untrusted non-3GPP access network, according to a registration operation performed by the terminal, receiving at least one of a registration type, a user identifier and an identifier of a non-public network, that the terminal needs to register with, corresponding to the registration operation and sent by the terminal; and
sending the at least one of the registration type, the user identifier and the identifier of the non-public network, that the terminal needs to register with, corresponding to the registration operation to an access and mobility management function (AMF).

Optionally, in an embodiment of the present disclosure, receiving the user identifier corresponding to the registration operation and sent by the terminal according to the registration operation performed by the terminal includes:
in response to that the registration operation performed by the terminal is an SNPN onboarding registration, receiving at least one of following user identifiers sent by the terminal:
an onboarding SUCI; and
an onboarding SUPI.

Optionally, in an embodiment of the present disclosure, receiving the user identifier corresponding to the registration operation and sent by the terminal according to the registration operation performed by the terminal includes:
in response to that the registration operation is an initial registration or a mobile registration update, receiving at least one of following user identifiers sent by the terminal:
an SUCI; and
an SUPI.

Optionally, in an embodiment of the present disclosure, receiving the registration type corresponding to the registration operation and sent by the terminal according to the registration operation performed by the terminal includes at least one of:
in response to that the registration operation performed by the terminal is performing an SNPN onboarding registration, receiving a registration type sent by the terminal in which the registration type is SNPN Onboarding;
in response to that the registration operation performed by the terminal is performing an initial registration, receiving a registration type sent by the terminal, in which the registration type is Initial Registration; and
in response to that the registration operation performed by the terminal is performing a mobile registration update, receiving a registration type sent by the terminal, in which the registration type is Mobile Registration Update.

Optionally, in an embodiment of the present disclosure, receiving the user identifier corresponding to the registration operation and sent by the terminal according to the performed registration operation includes:
in a non-public network (NPN) scenario, in response to that an extensible authentication protocol (EAP) method supports SUPI privacy, receiving an anonymous SUCI sent by the terminal according to configuration information of the terminal.

Optionally, in an embodiment of the present disclosure, the anonymous SUCI is an anonymous SUCI obtained by ignoring a username part in an original SUCI.

Optionally, in an embodiment of the present disclosure, the anonymous SUCI is an anonymous SUCI obtained by setting a username part in an original SUCI to anonymous.

Optionally, in an embodiment of the present disclosure, the method further includes:
receiving at least one N3IWF key (K_{N3IWF}), at least one SUCI and/or at least one SUCI generation algorithm sent by the AMF; and
storing a mapping relationship between the at least one K_{N3IWF} and the at least one SUCI.

Optionally, in an embodiment of the present disclosure, the method further includes:
sending an SUCI generation algorithm to the terminal;
receiving an SUCI sent by the terminal, in which the SUCI is generated according to the SUCI generation algorithm;
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

Optionally, in an embodiment of the present disclosure, the method further includes:
receiving an SUCI sent by the terminal in response to not sending an SUCI generation algorithm to the terminal;
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

Optionally, in an embodiment of the present disclosure, the method further includes:
receiving the SUCI sent by the terminal in response to not sending the SUCI generation algorithm to the terminal;
in a case that the K_{N3IWF} corresponding to the SUCI is not determined according to the SUCI and the mapping relationship between the at least one K_{N3IWF} and the at least one SUCI, sending the SUCI to the AMF;
receiving the K_{N3IWF} corresponding to the SUCI, determined according to the SUCI and sent by the AMF; and
authenticating the terminal according to the K_{N3IWF} corresponding to the SUCI.

Embodiments of another aspect of the present disclosure provide an authentication method for accessing a 3GPP network via a non-3GPP access network, which is performed by an AMF, and includes:
in a case that a terminal accesses the 3GPP network via an untrusted non-3GPP access network, according to a registration operation performed by the terminal, receiving at least one of a registration type, a user identifier and an identifier of a non-public network, that the terminal needs to register with, corresponding to the registration operation and sent by a N3IWF.

Optionally, in an embodiment of the present disclosure, receiving the user identifier corresponding to the registration operation and sent by the N3IWF according to the registration operation performed by the terminal includes:
in response to that the registration operation performed by the terminal is an SNPN onboarding registration, receiving at least one of following user identifiers sent by the N3IWF:
an onboarding SUCI; and
an onboarding SUPI.

Optionally, in an embodiment of the present disclosure, receiving the user identifier corresponding to the registration operation and sent by the N3IWF according to the registration operation performed by the terminal includes:
in response to that the registration operation is an initial registration or a mobile registration update, receiving at least one of following user identifiers sent by the N3IWF:
an SUCI; and
an SUPI.

Optionally, in an embodiment of the present disclosure, receiving the registration type corresponding to the registration operation and sent by the N3IWF according to the registration operation performed by the terminal includes at least one of:
in response to that the registration operation performed by the terminal is performing an SNPN onboarding registration, receiving a registration type sent by the N3IWF, in which the registration type is SNPN Onboarding;
in response to that the registration operation performed by the terminal is performing an initial registration, receiving a registration type sent by the N3IWF, in which the registration type is Initial Registration; and
in response to that the registration operation performed by the terminal is performing a mobile registration update, receiving a registration type sent by the N3IWF, in which the registration type is Mobile Registration Update.

Optionally, in an embodiment of the present disclosure, the method further includes:
applying AMF configuration data configured locally to onboarding, in which the AMF configuration data is used to limit a network application of the terminal to onboarding only; and
storing indication information in a context of the terminal in the AMF, in which the indication information is used to indicate that the terminal has completed onboarding registration.

Optionally, in an embodiment of the present disclosure, the method further includes:
based on an onboarding-SNPN (ON-SNPN) policy, starting a timer for realizing specific logout, in which the timer is configured for onboarding of the terminal.

Optionally, in an embodiment of the present disclosure, receiving the user identifier corresponding to the registration operation and sent by the N3IWF according to the performed registration operation includes:
in a non-public network (NPN) scenario, in response to that an extensible authentication protocol (EAP) method supports SUPI privacy, receiving an anonymous SUCI sent by the N3IWF, in which the anonymous SUCI is an anonymous SUCI sent by the terminal to the N3IWF according to configuration information of the terminal.

Optionally, in an embodiment of the present disclosure, the anonymous SUCI is an anonymous SUCI obtained by ignoring a username part in an original SUCI.

Optionally, in an embodiment of the present disclosure, the anonymous SUCI is an anonymous SUCI obtained by setting a username part in an original SUCI to anonymous.

Optionally, in an embodiment of the present disclosure, the method further includes:
authenticating the terminal in at least one of following authentication methods:
a 5G authentication and key agreement (AKA) authentication method;
an EAP-authentication and key agreement prime (AKA') authentication method; and
a key-generating EAP authentication method.

Optionally, in an embodiment of the present disclosure, the method further includes:
receiving a security anchor function (SEAF) key (K_{SEAF}), an SUPI, an SUCI and/or an SUCI generation algorithm sent by an authentication service function (AUSF);
generating an AMF key (K_{AMF}) according to the K_{SEAF} and the SUPI; and
generating a K_{N3IWF} according to the K_{AMF}, and storing mapping relationships among the SUPI, the SUCI and the K_{N3IWF}.

Optionally, in an embodiment of the present disclosure, the method further includes:
sending at least one K_{N3IWF}, at least one SUCI and/or at least one SUCI generation algorithm to the N3IWF.

Optionally, in an embodiment of the present disclosure, the method further includes:
receiving an SUCI sent by the N3IWF, in which the SUCI is an SUCI which is sent by the terminal to the N3IWF, and a K_{N3IWF} corresponding to which has not been determined by the N3IWF;
sending the SUCI to the AUSF;
receiving an SUPI sent by the AUSF for the SUCI, and determining the K_{N3IWF} corresponding to the SUCI according to the SUPI; and
sending the K_{N3IWF} corresponding to the SUCI to the N3IWF.

Embodiments of another aspect of the present disclosure provide an authentication apparatus for accessing a 3GPP network via a non-3GPP access network, which is arranged at a terminal side, and includes:
a sending module configured to, according to a performed registration operation, send at least one of a registration type, a user identifier and an identifier of a non-public network, that the terminal needs to register with, corresponding to the registration operation to a N3IWF, in a case that a terminal accesses the 3GPP network via an untrusted non-3GPP access network.

Embodiments of another aspect of the present disclosure provide an authentication apparatus for accessing a 3GPP network via a non-3GPP access network, which is arranged at a N3IWF side, and includes:
a receiving module configured to, according to a registration operation performed by a terminal, receive at least one of a registration type, a user identifier and an identifier of a non-public network, that the terminal needs to register with, corresponding to the registration operation and sent by the terminal, in a case that the terminal accesses the 3GPP network via an untrusted non-3GPP access network; and
a sending module configured to send the at least one of the registration type, the user identifier and the identifier of the non-public network, that the terminal needs to register with, corresponding to the registration operation to an AMF.

Embodiments of another aspect of the present disclosure provide an authentication apparatus for accessing a 3GPP network via a non-3GPP access network, which is arranged at an AMF side, and includes:
a receiving module configured to, according to a registration operation performed by a terminal, receive at least one of a registration type, a user identifier and an identifier of a non-public network, that the terminal needs to register with, corresponding to the registration operation and sent by a N3IWF, in a case that the terminal accesses the 3GPP network via an untrusted non-3GPP access network.

Embodiments of another aspect of the present disclosure provide a terminal, which includes a processor and a memory, a computer program is stored in the memory, and the processor executes the computer program stored in the memory, to cause the terminal to perform the method according to the above aspect.

Embodiments of another aspect of the present disclosure provide a N3IWF, which includes a processor and a memory, a computer program is stored in the memory, and the processor executes the computer program stored in the memory, to cause the N3IWF to perform the method according to the above aspect.

Embodiments of another aspect of the present disclosure provide an AMF, which includes a processor and a memory, a computer program is stored in the memory, and the processor executes the computer program stored in the memory, to cause the AMF to perform the method according to the above aspect.

Embodiments of another aspect of the present disclosure provide a communication device, which includes a processor and an interface circuit;
the interface circuit is configured to receive code instructions and transmit the code instructions to the processor; and
the processor is configured to run the code instructions to perform the method according to any of the above aspects.

Embodiments of another aspect of the present disclosure provide a computer-readable storage medium for storing instructions, which, when executed, cause the method according to any of the above aspects to be realized.

Embodiments of another aspect of the present disclosure provide a communication system, which includes:
a terminal configured to, according to a performed registration operation, send at least one of a registration type, a user identifier and an identifier of a non-public network, that the terminal needs to register with, corresponding the registration operation to a N3IWF, in a case that the terminal accesses a 3GPP network via an untrusted non-3GPP access network;
the N3IWF configured to, according to the registration operation performed by the terminal, receive the at least one of the registration type, the user identifier and the identifier of the non-public network, that the terminal needs to register with, corresponding to the registration operation and sent by the terminal, and send the at least one of the registration type, the user identifier and the identifier of the non-public network, that the terminal needs to register with, corresponding to the registration operation to an AMF; and
the AMF configured to, according to the registration operation performed by the terminal, receive the at least one of the registration type, the user identifier and the identifier of the non-public network, that the terminal needs to register with, corresponding to the registration operation and sent by the N3IWF.

To sum up, in the embodiments of the present disclosure, when the terminal accesses the 3GPP network via the untrusted non-3GPP access network, the at least one of the registration type, the user identifier and the identifier of the non-public network, that the terminal needs to register with, corresponding to the registration operation is sent to the N3IWF according to the performed registration operation. In the embodiments of the present disclosure, according to the registration operation performed by the terminal, information corresponding to the registration operation is sent to the N3IWF, which reduces the mismatch between the sent information and the registration operation performed by the terminal, improves the accuracy of authentication of accessing the 3GPP network via the non-3GPP access network, and enables the terminal to access the 3GPP network via the non-3GPP access network. The present disclosure provides a processing method for the case of "authentication of accessing the 3GPP network via the non-3GPP access network", so as to send the information corresponding to the registration operation to the N3IWF according to the registration operation performed by the terminal, which may improve the accuracy of authentication of accessing the 3GPP network via the non-3GPP access network.

### BRIEF DESCRIPTION OF THE DRAWINGS

The above and/or additional aspects and advantages of the present disclosure will be apparent and easily understood from the following description of embodiments with reference to the accompanying drawings.
Fig. 1 is a schematic interaction diagram of an authentication method for accessing a 3GPP network via a non-3GPP access network provided by an embodiment of the present disclosure.
Fig. 2 is a flow chart of an authentication method for accessing a 3GPP network via a non-3GPP access network provided by an embodiment of the present disclosure.
Fig. 3 is a flow chart of an authentication method for accessing a 3GPP network via a non-3GPP access network provided by another embodiment of the present disclosure.
Fig. 4 is a flow chart of an authentication method for accessing a 3GPP network via a non-3GPP access network provided by another embodiment of the present disclosure.
Fig. 5 is a flow chart of an authentication method for accessing a 3GPP network via a non-3GPP access network provided by another embodiment of the present disclosure.
Fig. 6 is a flow chart of an authentication method for accessing a 3GPP network via a non-3GPP access network provided by another embodiment of the present disclosure.
Fig. 7 is a flow chart of an authentication method for accessing a 3GPP network via a non-3GPP access network provided by another embodiment of the present disclosure.
Fig. 8 is a flow chart of an authentication method for accessing a 3GPP network via a non-3GPP access network provided by another embodiment of the present disclosure.
Fig. 9 is a flow chart of an authentication method for accessing a 3GPP network via a non-3GPP access network provided by another embodiment of the present disclosure.
Fig. 10 is a flow chart of an authentication method for accessing a 3GPP network via a non-3GPP access network provided by another embodiment of the present disclosure.
Fig. 11 is a flow chart of an authentication method for accessing a 3GPP network via a non-3GPP access network provided by another embodiment of the present disclosure.
Fig. 12 is a flow chart of an authentication method for accessing a 3GPP network via a non-3GPP access network provided by another embodiment of the present disclosure.
Fig. 13 is a flow chart of an authentication method for accessing a 3GPP network via a non-3GPP access network provided by another embodiment of the present disclosure.
Fig. 14 is a flow chart of an authentication method for accessing a 3GPP network via a non-3GPP access network provided by another embodiment of the present disclosure.
Fig. 15 is a flow chart of an authentication method for accessing a 3GPP network via a non-3GPP access network provided by another embodiment of the present disclosure.
Fig. 16 is a schematic interaction diagram of an authentication method for accessing a 3GPP network via a non-3GPP access network provided by an embodiment of the present disclosure.
Fig. 17 is a schematic interaction diagram of an authentication method for accessing a 3GPP network via a non-3GPP access network provided by an embodiment of the present disclosure.
Fig. 18 is a flow chart of an authentication method for accessing a 3GPP network via a non-3GPP access network provided by another embodiment of the present disclosure.
Fig. 19 is a flow chart of an authentication method for accessing a 3GPP network via a non-3GPP access network provided by another embodiment of the present disclosure.
Fig. 20 is a flow chart of an authentication method for accessing a 3GPP network via a non-3GPP access network provided by another embodiment of the present disclosure.
Fig. 21 is a flow chart of an authentication method for accessing a 3GPP network via a non-3GPP access network provided by another embodiment of the present disclosure.
Fig. 22 is a flow chart of an authentication method for accessing a 3GPP network via a non-3GPP access network provided by another embodiment of the present disclosure.
Fig. 23 is a flow chart of an authentication method for accessing a 3GPP network via a non-3GPP access network provided by another embodiment of the present disclosure.
Fig. 24 is a flow chart of an authentication method for accessing a 3GPP network via a non-3GPP access network provided by another embodiment of the present disclosure.
Fig. 25 is a schematic interaction diagram of an authentication method for accessing a 3GPP network via a non-3GPP access network provided by an embodiment of the present disclosure.
Fig. 26 is a schematic interaction diagram of an authentication method for accessing a 3GPP network via a non-3GPP access network provided by an embodiment of the present disclosure.
Fig. 27 is a schematic architecture diagram of a communication system provided by an embodiment of the present disclosure.
Fig. 28 is a schematic diagram of an authentication apparatus for accessing a 3GPP network via a non-3GPP access network provided by an embodiment of the present disclosure.
Fig. 29 is a schematic diagram of an authentication apparatus for accessing a 3GPP network via a non-3GPP access network provided by another embodiment of the present disclosure.
Fig. 30 is a schematic diagram of an authentication apparatus for accessing a 3GPP network via a non-3GPP access network provided by another embodiment of the present disclosure.
Fig. 31 is a block diagram of a terminal provided by an embodiment of the present disclosure.
Fig. 32 is a block diagram of a network device provided by an embodiment of the present disclosure.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the embodiments of the present disclosure. Rather, they are merely examples of apparatuses and methods consistent with some aspects of embodiments of the present disclosure as detailed in the appended claims.

The terms used in the embodiments of the present disclosure are for the purpose of describing specific embodiments only, and are not intended to limit the embodiments of the present disclosure. The singular forms "a" and "the" used in the embodiments of present disclosure and the appended claims are also intended to include the plural forms, unless the context clearly indicates other meaning. It may also be understood that the term "and/or" as used herein refers to and includes any or all possible combinations of one or more associated listed items.

It may be understood that although the terms first, second, third, etc. may be used to describe various information in the embodiments of the present disclosure, these information may not be limited to these terms. These terms are only used to distinguish the same type of information from each other. For example, without departing from the scope of the embodiments of the present disclosure, the first information may also be called the second information, and similarly, the second information may also be called the first information. Depending on the context, the word "if" as used herein may be interpreted as "when" or "while" or "in response to determining".

The network elements or network functions involved in the embodiments of present disclosure may be realized by independent hardware devices or by software in the hardware devices, which is not limited in the embodiments of the present disclosure.

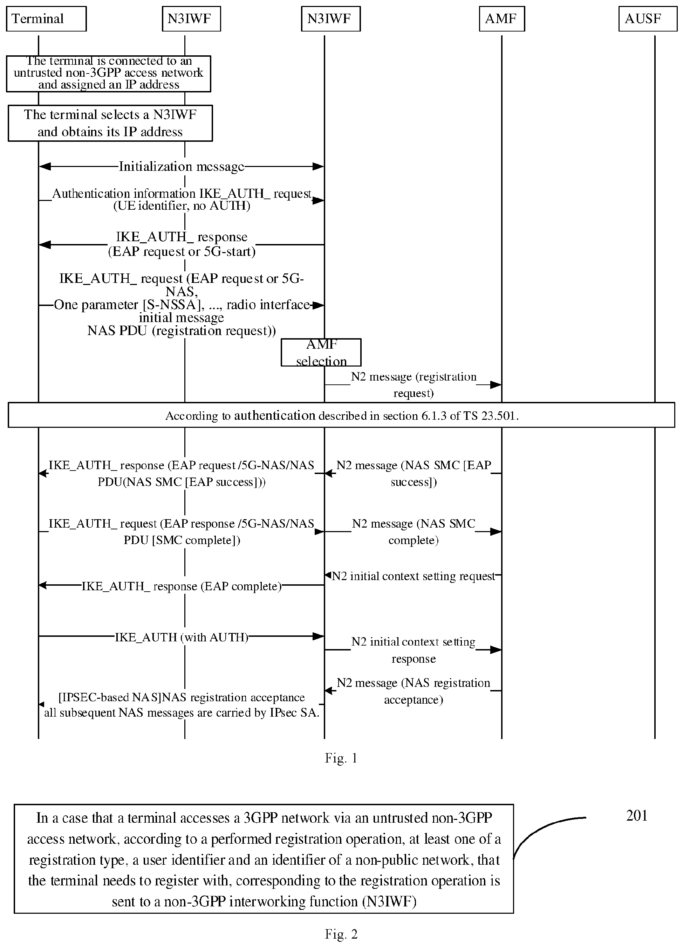

Fig. 1 shows a schematic interaction diagram of an authentication method for accessing a 3GPP network via a non-3GPP access network provided by an embodiment of the present disclosure. As shown in Fig. 1, first, a terminal is connected to an untrusted non-3GPP access network using a procedure outside a 3GPP range. When the terminal decides to be connected to a 5GC network of a 5G core network, the terminal may select a non-3GPP interworking function (N3IWF) in a 5G public land mobile network (PLMN). Second, the terminal may continue to establish an IPsec security association (SA) with the selected N3IWF by initiating an initial exchange of a network key exchange protocol (IKE) according to RFC 7296. All IKE messages after the second step may be encrypted and protected for integrity by using the IKE SA established in this step. Third, the terminal may initiate an IKE_AUTH exchange by sending an IKE_Authentication (AUTH) request message. An AUTH payload is not included in the IKE_AUTH request message, which indicates that the IKE_AUTH exchange may use an EAP signaling, and in the embodiments of the present disclosure, the EAP signaling may be EAP-5G signaling, for example. According to RFC 7296, in a data information segment (IDi), the terminal should set an identification (ID) type to ID_KEY-ID in the message, and set its value to any random number. The IDi is a data information segment including ID information. In this step, the terminal should not use any one of its globally unique temporary UE identifier (GUTI), subscription concealed identifier (SUCI) and subscription permanent identifier (SUPI) as the identification (ID). If the terminal provides a N3IWF root certificate, the terminal should include an authentication request information CERTREQ payload in the IKE_AUTH request message to request the N3IWF certificate.

Fourth, in an embodiment of the present disclosure, the N3IWF may respond with an IKE_AUTH response message, the IKE_AUTH response message includes a N3IWF identity, an AUTH payload and an EAP-request or 5G-start data packet, and the AUTH payload is used to protect a previous message sent by the N3IWF to the terminal (in the IKE_SA_INIT exchange). The EAP-request or 5G-start data packet is used to notify the terminal to start an EAP-5G session, that is, to start sending a network attached storage (NAS) message encapsulated in the EAP-5G data packet. If the terminal sends the CERTREQ payload in the third step, the N3IWF should also send a CERT payload containing the N3IWF certificate to the terminal. Fifth, the terminal will verify the N3IWF certificate and confirm that the N3IWF identity matches the N3IWF selected by the terminal. If the terminal fails to request the certificate or confirm the identity, the lack of certificate of the N3IWF will lead to the connection failure. When the identity of the N3IWF is confirmed, the terminal should send an IKE_AUTH request, which includes an EAP-response or 5G-NAS data packet, and this data packet contains a registration request message, which includes a terminal security capability and the SUCI/an employment SUCI/an anonymous value SUCI. The N3IWF does not send an EAP-identity request, because the terminal contains its identity in the IKE_AUTH request in the fifth step.

In an embodiment of the present disclosure, sixth, the N3IWF should select an access and mobility management function (AMF) specified in section 6.5.3 of TS 23.501. The N3IWF forwards the registration request received from the terminal to the AMF. The registration request is carried in a N2 message. A physical interface between the terminal and the AMF is denoted as N2. Seventh, an authentication operation is performed according to the authentication described in section 6.1.3 of TS 23.501. In a final authentication message from a home network, an authentication service function (AUSF) should send an anchor key (K_{SEAF}) from an AUSF key (K_{AUSF}) to a security anchor function (SEAF). The SEAF shall derive an AMF key (K_{AMF}) from the K_{SEAF} and send it to the AMF. The AMF uses this K_{AMF} to drive a NAS security key. If an extensible authentication protocol-authentication and key agreement prime (EAP-AKA') authentication method or a key-generating EAP authentication method is used for authentication, the AUSF should send an EAP-success. The terminal may also derive the anchor key (K_{SEAF}), and derive the K_{AMF} from this key, and then derive the NAS security key. A NAS count (NAS COUNT) related to a NAS connection identifier "0x02" is set at the terminal and the AMF. The AMF and the AUSF may be combined, for example, that is, the AMF and AUSF are one device. Eighth, the AMF should send a security mode command (SMC) to the terminal to activate the NAS security related to the NAS connection identifier "0x02". The message is first sent to the N3IWF (in the N2 message). If the EAP-AKA' is used for authentication, the AMF should encapsulate the EAP-success received from the AUSF in an SMC message.

In an embodiment of the present disclosure, ninth, the N3IWF should forward a NAS SMC to the terminal in the EAP-request/5G-NAS data packet. Tenth, the terminal completes authentication (if started in step 7) and creates a NAS security context or activates a NAS security context based on a security context identifier (ngKSI) received in the NAS SMC. The terminal should respond to the NAS SMC received from the AMF according to the selected algorithm and parameters described in section 6.7.2 of TS 23.501. The UE should encapsulate a NAS SMC complete in the EAP-5G response. Eleventh, the N3IWF should forward a NAS data packet containing the NAS SMC complete to the AMF through the N2 interface. Twelfth, the AMF starts a next generation application protocol (NGAP) procedure to establish a context after receiving the NAS SMC complete from the terminal or the successful integrity protection verification. The AMF shall calculate a N3IWF key (K_{N3IWF}) using an uplink NAS COUNT associated with the defined NAS connection identifier "0x02" to establish the IPsec SA between the terminal and the N3IWF, and send a NGAP initial context setup request to the N3IWF, in which the NGAP initial context setup request includes the K_{N31WF}. Thirteenth, the N3IWF may send the EAP-success or EAP-5G to the terminal when receiving the NGAP initial context setup request containing the N3IWF key (K_{N3IWF}). In this way, the EAP-5G session is completed, and the EAP-5G data packet is no longer exchanged. If the N3IWF does not receive the K_{N3IWF} from the AMF, the N3IWF should respond with an EAP-Failure.

In an embodiment of the present disclosure, fourteenth, the IPsec SA is established between the terminal and the N3IWF by using the N3IWF key (K_{N3IWF}), which is created in the terminal by using the uplink NAS COUNT associated with the defined NAS connection identifier "0x02" and is received by the N3IWF from the AMF in the twelfth step. Fifth, after the IPsec SA is successfully established between the terminal and the N3IWF, the N3IWF will send a NGAP initial context setup response message to the AMF. Sixteenth, when the AMF receives the NGAP initial context setup response of the UE, the AMF will send a NAS registration acceptance message of the terminal to the N3IWF through the N2 message. Seventeenth, after receiving the NAS registration acceptance message from the AMF, the N3IWF will forward it to the terminal through the established IPsec SA. All further NAS messages between the terminal and the N3IWF shall be sent through the established IPsec SA.

Hereinafter, an authentication method and an authentication apparatus for accessing a 3GPP network via a non-3GPP access network, a device and a storage medium provided by embodiments of the present disclosure will be described in detail with reference to the accompanying drawings.

Fig. 2 is a flow chart of an authentication method for accessing a 3GPP network via a non-3GPP access network provided by an embodiment of the present disclosure, which is performed by a terminal. As shown in Fig. 2, the method may include the following steps.

In step 201, in a case that a terminal accesses a 3GPP network via an untrusted non-3GPP access network, according to a performed registration operation, at least one of a registration type, a user identifier and an identifier of a non-public network, that the terminal needs to register with, corresponding to the registration operation is sent to a non-3GPP interworking function (N3IWF).

It may be noted that, in an embodiment of the present disclosure, the terminal may be a device that provides voice and/or data connectivity to a user. The terminal may communicate with one or more core networks via a Radio Access Network (RAN). The terminal may be an Internet of Things terminal, such as a sensor device, a mobile phone (or a cellular phone) and a computer with the Internet of Things terminal, for example, fixed, portable, pocketsized, handheld, computer-built or vehicle-mounted apparatuses, such as, a subscriber station (STA), a subscriber unit, a mobile station, a mobile, a remote station, an access point, a remote terminal, an access terminal, a user terminal or a user agent. Alternatively, the terminal may also be an unmanned aerial vehicle. Alternatively, the terminal may also be a vehicle-mounted device, for example, it may be a driving computer with a wireless communication function or a wireless terminal externally connected to the driving computer. Alternatively, the terminal may also be roadside device, such as a street lamp, a signal lamp or other roadside devices with a wireless communication function.

In an embodiment of the present disclosure, the 3GPP network is a non-public network.

In an embodiment of the present disclosure, the identifier of the non-public network includes a public land mobile network identifier (PLMN ID) and a network identifier (NID).

In an embodiment of the present disclosure, sending the user identifier corresponding to the registration operation to the N3IWF according to the performed registration operation includes:
sending at least one of following user identifiers to the N3IWF in response to that the performed registration operation is a standalone non-public network (SNPN) onboarding registration:
an onboarding subscription concealed identifier (SUCI); and
an onboarding subscription permanent identifier (SUPI).

In an embodiment of the present disclosure, according to the performed registration operation, sending the user identifier corresponding to the registration operation to the N3IWF includes:
in response to that the performed registration operation is performing an initial registration or performing a mobile registration update, sending at least one of following user identifiers to the N3IWF:
an SUCI; and
an SUPI.

For example, in an embodiment of the present disclosure, according to the performed registration operation, sending the registration type corresponding to the registration operation to the N3IWF includes at least one of:
in response to that the performed registration operation is performing an standalone non-public network (SNPN) onboarding registration, sending a registration type to the N3IWF, in which the registration type is SNPN Onboarding;
in response to that the performed registration operation is performing an initial registration, sending a registration type to the N3IWF, in which the registration type is Initial Registration; and
in response to that the performed registration operation is performing a mobile registration update, sending a registration type to the N3IWF, in which the registration type is Mobile Registration Update.

In an embodiment of the present disclosure, according to the performed registration operation, sending the user identifier corresponding to the registration operation to the N3IWF includes:
in a non-public network (NPN) scenario, in response to that an extensible authentication protocol (EAP) method supports SUPI privacy (i.e., a privacy protection mechanism for the SUPI), sending an anonymous SUCI to the N3IWF according to configuration information of the terminal.

Further, in an embodiment of the present disclosure, the anonymous SUCI is an anonymous SUCI obtained by ignoring a username part in an original SUCI.

Further, in an embodiment of the present disclosure, the anonymous SUCI is an anonymous SUCI obtained by setting a username part in an original SUCI to anonymous.

Further, in an embodiment of the present disclosure, the method further includes:
receiving an SUCI generation algorithm sent by the N3IWF; and
generating an SUCI according to the SUCI generation algorithm and send the SUCI to the N3IWF.

Further, in an embodiment of the present disclosure, the method further includes:
sending the SUCI to the N3IWF in response to not receiving the SUCI generation algorithm sent by the N3IWF.

To sum up, in this embodiment of the present disclosure, when the terminal accesses the 3GPP network via the untrusted non-3GPP access network, at least one of the registration type, the user identifier and the identifier of the non-public network, that the terminal needs to register with, corresponding to the registration operation is sent to the non-3GPP interworking function (N3IWF) according to the performed registration operation. In this embodiment of the present disclosure, according to the registration operation performed by the terminal, information corresponding to the registration operation is sent to the N3IWF, which reduces the mismatch between the sent information and the registration operation performed by the terminal, improves the accuracy of authentication of accessing the 3GPP network via the non-3GPP access network, and enables the terminal to access the 3GPP network via the non-3GPP access network. The present disclosure provides a processing method for the case of "authentication of accessing the 3GPP network via the non-3GPP access network", so as to send the information corresponding to the registration operation to the N3IWF according to the registration operation performed by the terminal, which may improve the accuracy of authentication of accessing the 3GPP network via the non-3GPP access network.

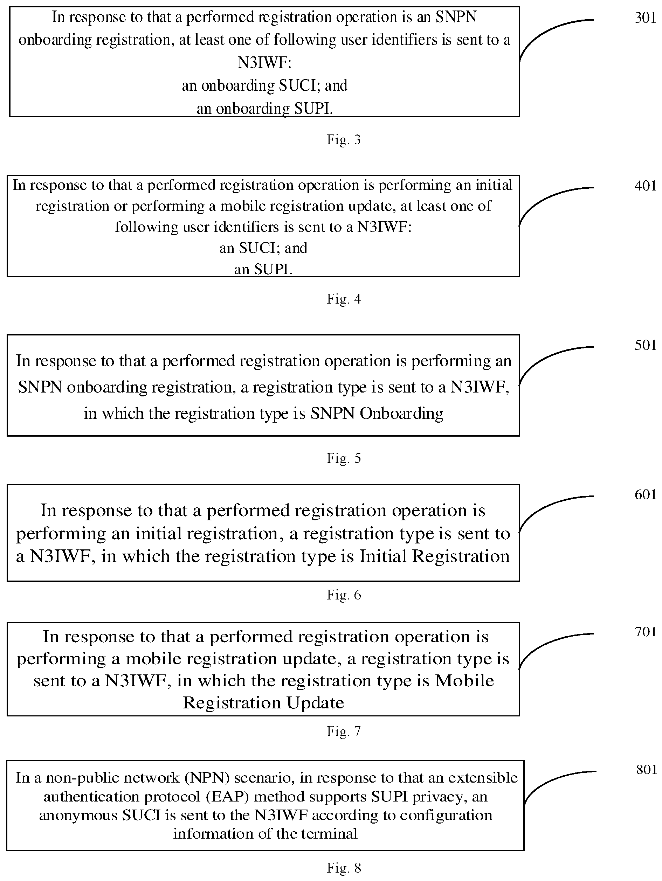

Fig. 3 is a flow chart of an authentication method for accessing a 3GPP network via a non-3GPP access network provided by an embodiment of the present disclosure, which is performed by a terminal. As shown in Fig. 3, the method may include the following steps.

In step 301, in response to that a performed registration operation is an SNPN onboarding registration, at least one of following user identifiers is sent to a N3IWF:
an onboarding SUCI; and
an onboarding SUPI.

In an embodiment of the present disclosure, when the terminal accesses the 3GPP network via an untrusted non-3GPP access network, in response to that the performed registration operation being the SNPN onboarding registration, the terminal sends at least one of the following user identifiers to the N3IWF: the onboarding SUCI; and the onboarding SUPI. For example, the terminal may send the onboarding SUCI to the N3IWF, or the terminal may send the onboarding SUPI to the N3IWF.

To sum up, in this embodiment of the present disclosure, when the terminal accesses the 3GPP network via the untrusted non-3GPP access network, in response to that the performed registration operation is the SNPN onboarding registration, at least one of the following user identifiers is sent to the N3IWF: the onboarding SUCI; and the onboarding SUPI. In this embodiment of the present disclosure, according to the SNPN onboarding registration performed by the terminal, the user identifier corresponding to the registration operation is sent to the N3IWF, which reduces the mismatch between the sent user identifier and the registration operation performed by the terminal, improves the accuracy of authentication of accessing the 3GPP network via the non-3GPP access network, and enables the terminal to access the 3GPP network via the non-3GPP access network. The present disclosure provides a processing method for the case of "authentication of accessing the 3GPP network via the non-3GPP access network", so as to send the user identifier corresponding to the registration operation to the N3IWF according to the registration operation performed by the terminal, which may improve the accuracy of authentication of accessing the 3GPP network via the non-3GPP access network.

Fig. 4 is a flow chart of an authentication method for accessing a 3GPP network via a non-3GPP access network provided by an embodiment of the present disclosure, which is performed by a terminal. As shown in Fig. 4, the method may include the following steps.

In step 401, in response to that a performed registration operation is performing an initial registration or performing a mobile registration update, at least one of following user identifiers is sent to a N3IWF:
an SUCI; and
an SUPI.

In an embodiment of the present disclosure, when the terminal accesses the 3GPP network via an untrusted non-3GPP access network, in response to that the performed registration operation is performing the initial registration or performing the mobile registration update, the user identifier sent by the terminal to the N3IWF may be at least one of:
the SUCI; and
the SUPI.

For example, the terminal may send the SUCI to the N3IWF, or the terminal may send the SUPI to the N3IWF.

To sum up, in this embodiment of the present disclosure, when the terminal accesses the 3GPP network via the untrusted non-3GPP access network, in response to that the performed registration operation is performing the initial registration or performing the mobile registration update, at least one of the following user identifiers is sent to the N3IWF: the SUCI, and the SUPI. In this embodiment of the present disclosure, according to the initial registration or mobile registration update performed by the terminal, the user identifier corresponding to the registration operation is sent to the N3IWF, which reduces the mismatch between the sent user identifier and the registration operation performed by the terminal, improves the accuracy of authentication of accessing the 3GPP network via the non-3GPP access network, and enables the terminal to access the 3GPP network via the non-3GPP access network. The present disclosure provides a processing method for the case of "authentication of accessing the 3GPP network via the non-3GPP access network", so as to send the user identifier corresponding to the registration operation to the N3IWF according to the initial registration or mobile registration update performed by the terminal, which may improve the accuracy of authentication of accessing the 3GPP network via the non-3GPP access network.

Fig. 5 is a flow chart of an authentication method for accessing a 3GPP network via a non-3GPP access network provided by an embodiment of the present disclosure, which is performed by a terminal. As shown in Fig. 5, the method may include the following steps.

In step 501, in response to that a performed registration operation is performing an SNPN onboarding registration, a registration type is sent to a N3IWF, in which the registration type is SNPN Onboarding.

To sum up, in this embodiment of the present disclosure, when the terminal accesses the 3GPP network via an untrusted non-3GPP access network, in response to that the performed registration operation is performing the SNPN onboarding registration, the registration type is sent to the N3IWF, in which the registration type is SNPN Onboarding. In this embodiment of the present disclosure, according to the SNPN onboarding registration performed by the terminal, the registration type corresponding to the registration operation is sent to the N3IWF, which reduces the mismatch between the sent registration type and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme that the registration type corresponding to the SNPN onboarding registration is the registration type which is SNPN onboarding. The present disclosure provides a processing method for the case of "authentication of accessing the 3GPP network via the non-3GPP access network", so as to send the registration type corresponding to the registration operation to the N3IWF according to the SNPN onboarding registration performed by the terminal, which may improve the accuracy of authentication of accessing the 3GPP network via the non-3GPP access network.

Fig. 6 is a flow chart of an authentication method for accessing a 3GPP network via a non-3GPP access network provided by an embodiment of the present disclosure, which is performed by a terminal. As shown in Fig. 6, the method may include the following steps.

In step 601, in response to that a performed registration operation is performing an initial registration, a registration type is sent to a N3IWF, in which the registration type is Initial Registration.

To sum up, in this embodiment of the present disclosure, when the terminal accesses the 3GPP network via an untrusted non-3GPP access network, in response to that the performed registration operation is performing the initial registration, the registration type is sent to the N3IWF, in which the registration type is Initial Registration. In this embodiment of the present disclosure, according to the initial registration performed by the terminal, the registration type corresponding to the registration operation is sent to the N3IWF, which reduces the mismatch between the sent registration type and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme that the registration type corresponding to the initial registration is the registration type, which is initial registration. The present disclosure provides a processing method for the case of "authentication of accessing the 3GPP network via the non-3GPP access network", so as to send the registration type corresponding to the registration operation to the N3IWF according to the initial registration performed by the terminal, which may improve the accuracy of authentication of accessing the 3GPP network via the non-3GPP access network.

Fig. 7 is a flow chart of an authentication method for accessing a 3GPP network via a non-3GPP access network provided by an embodiment of the present disclosure, which is performed by a terminal. As shown in Fig. 7, the method may include the following steps.

In step 701, in response to that a performed registration operation is performing a mobile registration update, a registration type is sent to a N3IWF, in which the registration type is Mobile Registration Update.

To sum up, in this embodiment of the present disclosure, when the terminal accesses the 3GPP network via an untrusted non-3GPP access network, in response to that the performed registration operation is performing the mobile registration update, the registration type is sent to the N3IWF, in which the registration type is Mobile Registration Update. In this embodiment of the present disclosure, according to the mobile registration update performed by the terminal, the registration type corresponding to the registration operation is sent to the N3IWF, which reduces the mismatch between the sent registration type and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme that the registration type corresponding to the mobile registration update is the registration type which is mobile registration update. The present disclosure provides a processing method for the case of "authentication of accessing the 3GPP network via the non-3GPP access network", so as to send the registration type corresponding to the registration operation to the N3IWF according to the initial registration performed by the terminal, which may improve the accuracy of authentication of accessing the 3GPP network via the non-3GPP access network.

Fig. 8 is a flow chart of an authentication method for accessing a 3GPP network via a non-3GPP access network provided by an embodiment of the present disclosure, which is performed by a terminal. As shown in Fig. 8, the method may include the following steps.

In step 801, in a non-public network (NPN) scenario, in response to that an extensible authentication protocol (EAP) method supports SUPI privacy, an anonymous SUCI is sent to the N3IWF according to configuration information of the terminal.

In an embodiment of the present disclosure, the anonymous SUCI is an anonymous SUCI obtained by ignoring a username part in an original SUCI.

In an embodiment of the present disclosure, the anonymous SUCI is an anonymous SUCI obtained by setting a username part in an original SUCI to anonymous.

Further, in an embodiment of the present disclosure, the method further includes:
receiving an SUCI generation algorithm sent by the N3IWF; and
generating an SUCI according to the SUCI generation algorithm and send the SUCI to the N3IWF.

Further, in an embodiment of the present disclosure, the method further includes:
sending the SUCI to the N3IWF in response to not receiving the SUCI generation algorithm sent by the N3IWF.

To sum up, in these embodiments of the present disclosure, in the non-public network (NPN) scenario, in response to that the extensible authentication protocol (EAP) method supports the SUPI privacy, the anonymous SUCI is sent to the N3IWF according to the configuration information of the terminal. In these embodiments of the present disclosure, in response to that the EAP method supports the SUPI privacy, the anonymous SUCI is sent to the N3IWF according to the configuration information of the terminal, which may improve the accuracy of authentication of accessing the 3GPP network via the non-3GPP access network, and enable the terminal to access the 3GPP network via the non-3GPP access network. These embodiments of the present disclosure specifically disclose a scheme of sending the anonymous SUCI according to the configuration information of terminal. The present disclosure provides a processing method for the case of "authentication of accessing the 3GPP network via the non-3GPP access network", so as to send the registration type corresponding to the registration operation to the N3IWF according to the registration operation performed by the terminal, which may improve the accuracy of authentication of accessing the 3GPP network via the non-3GPP access network.

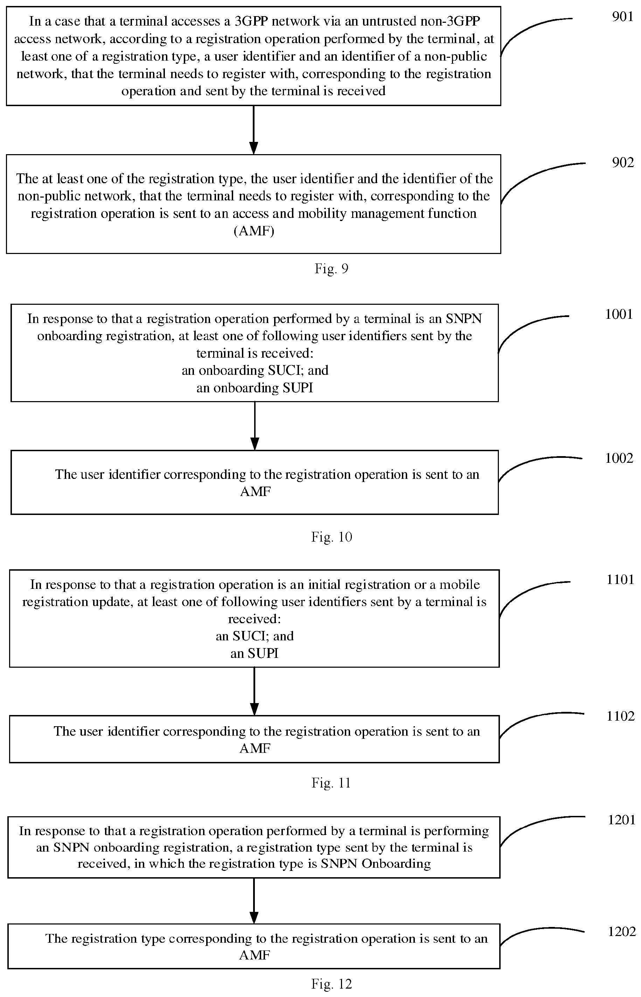

Fig. 9 is a flow chart of an authentication method for accessing a 3GPP network via a non-3GPP access network provided by an embodiment of the present disclosure, which is executed by a N3IWF. As shown in Fig. 9, the method may include the following steps.

In step 901, in a case that a terminal accesses a 3GPP network via an untrusted non-3GPP access network, according to a registration operation performed by the terminal, at least one of a registration type, a user identifier and an identifier of a non-public network, that the terminal needs to register with, corresponding to the registration operation and sent by the terminal is received.

In step 902, the at least one of the registration type, the user identifier and the identifier of the non-public network, that the terminal needs to register with, corresponding to the registration operation is sent to an access and mobility management function (AMF).

In an embodiment of the present disclosure, receiving the user identifier corresponding to the registration operation sent by the terminal according to the registration operation performed by the terminal includes:
in response to that the registration operation performed by the terminal is an SNPN onboarding registration, receiving at least one of following user identifiers sent by the terminal:
an onboarding SUCI; and
an onboarding SUPI.

For example, in an embodiment of the present disclosure, according to the registration operation performed by the terminal, receiving the user identifier corresponding to the registration operation and sent by the terminal includes:
in response to that the registration operation is an initial registration or a mobile registration update, receiving at least one of following user identifiers sent by the terminal:
an SUCI; and
an SUPI.

For example, in an embodiment of the present disclosure, according to the registration operation performed by the terminal, receiving the registration type corresponding to the registration operation and sent by the terminal includes at least one of:
in response to that the registration operation performed by the terminal is performing an SNPN onboarding registration, receiving a registration type sent by the terminal, in which the registration type is SNPN Onboarding;
in response to that the registration operation performed by the terminal is performing an initial registration, receiving a registration type sent by the terminal, in which the registration type is Initial Registration; and
in response to that the registration operation performed by the terminal is performing a mobile registration update, receiving a registration type sent by the terminal, in which the registration type is Mobile Registration Update.

For example, in an embodiment of the present disclosure, according to the performed registration operation, receiving the user identifier corresponding to the registration operation and sent by the terminal includes:
in a non-public network (NPN) scenario, in response to that an extensible authentication protocol (EAP) method supports SUPI privacy, receiving an anonymous SUCI sent by the terminal according to configuration information of the terminal.

Further, in an embodiment of the present disclosure, the anonymous SUCI is an anonymous SUCI obtained by ignoring a username part in an original SUCI.

Further, in an embodiment of the present disclosure, the anonymous SUCI is an anonymous SUCI obtained by setting a username part in an original SUCI to anonymous.

In an embodiment of the present disclosure, the method further includes:
receiving at least one N3IWF key (K_{N3IWF}), at least one SUCI and/or at least one SUCI generation algorithm sent by the AMF; and
storing a mapping relationship between the at least one K_{N3IWF} and the at least one SUCI.

In an embodiment of the present disclosure, the method further includes:
sending an SUCI generation algorithm to the terminal; and
receiving an SUCI sent by the terminal, in which the SUCI is generated according to the SUCI generation algorithm;
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

In an embodiment of the present disclosure, the method further includes:
receiving an SUCI sent by the terminal in response to not sending an SUCI generation algorithm to the terminal; and
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

In an embodiment of the present disclosure, the method further includes:
receiving an SUCI sent by the terminal in response to not sending an SUCI generation algorithm to the terminal;
in a case that a K_{N3IWF} corresponding to the SUCI is not determined according to the SUCI and a mapping relationship between at least one K_{N3IWF} and at least one SUCI, sending the SUCI to the AMF;
receiving the K_{N3IWF} corresponding to the SUCI, determined according to the SUCI and sent by the AMF; and
authenticating the terminal according to the K_{N3IWF} corresponding to the SUCI.

For example, in an embodiment of the present disclosure, it is optional for the N3IWF to send the SUCI generation algorithm to the terminal every time, that is, the N3IWF may send the SUCI generation algorithm to the terminal every time, or the N3IWF may not send the SUCI generation algorithm to the terminal every time.

For example, in an embodiment of the present disclosure, when the N3IWF receives the SUCI sent by the terminal, the N3IWF may position the K_{N3IWF} through the SUCI, and then use the K_{N3IWF} to establish an IPsec SA with the terminal.

To sum up, in these embodiments of the present disclosure, when the terminal accesses the 3GPP network via the untrusted non-3GPP access network, according to the registration operation performed by the terminal, the at least one of the registration type, the user identifier and the identifier of the non-public network, that the terminal needs to register with, corresponding to the registration operation and sent by the terminal is received, and the at least one of the registration type, the user identifier and the identifier of the non-public network, that the terminal needs to register with, corresponding to the registration operation is sent to the AMF. In these embodiments of the present disclosure, according to the registration operation performed by the terminal, information corresponding to the registration operation is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. The present disclosure provides a processing method for the case of "authentication of accessing the 3GPP network via the non-3GPP access network", so as to receive the information corresponding to the registration operation according to the registration operation performed by the terminal, which may improve the accuracy of authentication of accessing the 3GPP network via the non-3GPP access network.

Fig. 10 is a flow chart of an authentication method for accessing a 3GPP network via a non-3GPP access network provided by an embodiment of the present disclosure, which is performed by a N3IWF. As shown in Fig. 10, the method may include the following steps.

In step 1001, in response to that a registration operation performed by a terminal is an SNPN onboarding registration, at least one of following user identifiers sent by the terminal is received:
an onboarding SUCI; and
an onboarding SUPI.

In step 1002, the user identifier corresponding to the registration operation is sent to an AMF.

To sum up, in this embodiment of the present disclosure, when the terminal accesses the 3GPP network via an untrusted non-3GPP access network, in response to that the registration operation performed by the terminal is the SNPN onboarding registration, the at least one of the following user identifiers sent by the terminal is received: the onboarding SUCI; and the onboarding SUPI, and the user identifier corresponding to the registration operation is sent to the AMF. In this embodiment of the present disclosure, according to the registration operation performed by the terminal, information corresponding to the registration operation is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the user identifier corresponding to the SNPN onboarding registration. The present disclosure provides a processing method for the case of "authentication of accessing the 3GPP network via the non-3GPP access network", so as to receive the information corresponding to the registration operation according to the registration operation performed by the terminal, which may improve the accuracy of authentication of accessing the 3GPP network via the non-3GPP access network.

Fig. 11 is a flow chart of an authentication method for accessing a 3GPP network via a non-3GPP access network provided by an embodiment of the present disclosure, which is performed by a N3IWF. As shown in Fig. 11, the method may include the following steps.

In step 1101, in response to that a registration operation is an initial registration or a mobile registration update, at least one of following user identifiers sent by a terminal is received:
an SUCI; and
an SUPI.

In step 1102, the user identifier corresponding to the registration operation is sent to an AMF.

To sum up, in this embodiment of the present disclosure, when the terminal accesses the 3GPP network via an untrusted non-3GPP access network, in response to that the registration operation is the initial registration or the mobile registration update, the at least one of the following user identifiers sent by the terminal is received: the SUCI; and the SUPI, and the user identifier corresponding to the registration operation is sent to the AMF. In this embodiment of the present disclosure, according to the registration operation performed by the terminal, information corresponding to the registration operation is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the user identifier corresponding to the initial registration or the mobile registration update. The present disclosure provides a processing method for the case of "authentication of accessing the 3GPP network via the non-3GPP access network", so as to receive the information corresponding to the registration operation according to the registration operation performed by the terminal, which may improve the accuracy of authentication of accessing the 3GPP network via the non-3GPP access network.

Fig. 12 is a flow chart of an authentication method for accessing a 3GPP network via a non-3GPP access network provided by an embodiment of the present disclosure, which is performed by a N3IWF. As shown in Fig. 12, the method may include the following steps.

In step 1201, in response to that a registration operation performed by a terminal is performing an SNPN onboarding registration, a registration type sent by the terminal is received, in which the registration type is SNPN Onboarding.

In step 1202, the registration type corresponding to the registration operation is sent to an AMF.

To sum up, in this embodiment of present disclosure, when the terminal accesses the 3GPP network via an untrusted non-3GPP access network, in response to that the registration operation performed by the terminal is performing the SNPN onboarding registration, the registration type sent by the terminal is received, in which the registration type is SNPN Onboarding, and the registration type corresponding to the registration operation is sent to the AMF. In this embodiment of the present disclosure, according to the registration operation performed by the terminal, information corresponding to the registration operation is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the registration type corresponding to the SNPN onboarding registration. The present disclosure provides a processing method for the case of "authentication of accessing the 3GPP network via the non-3GPP access network", so as to receive the information corresponding to the registration operation according to the registration operation performed by the terminal, which may improve the accuracy of authentication of accessing the 3GPP network via the non-3GPP access network.

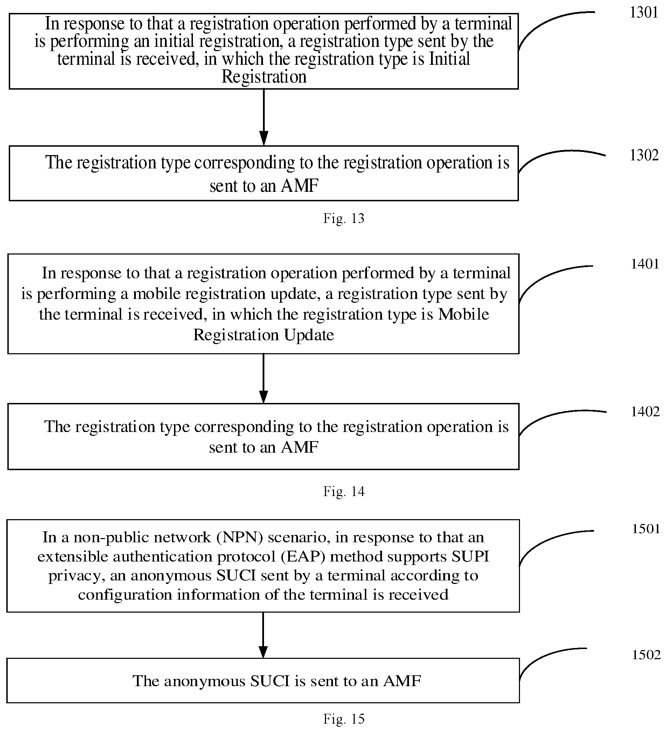

Fig. 13 is a flow chart of an authentication method for accessing a 3GPP network via a non-3GPP access network provided by an embodiment of the present disclosure, which is performed by a N3IWF. As shown in Fig. 13, the method may include the following steps.

In step 1301, in response to that a registration operation performed by a terminal is performing an initial registration, a registration type sent by the terminal is received, in which the registration type is Initial Registration.

In step 1302, the registration type corresponding to the registration operation is sent to an AMF.

To sum up, in this embodiment of the present disclosure, when the terminal accesses the 3GPP network via an untrusted non-3GPP access network, in response to that the registration operation performed by the terminal is performing the initial registration, the registration type sent by the terminal is received, in which the registration type is Initial Registration, and the registration type corresponding to the registration operation is sent to the AMF. In this embodiment of the present disclosure, according to the registration operation performed by the terminal, information corresponding to the registration operation is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the registration type corresponding to the initial registration. The present disclosure provides a processing method for the case of "authentication of accessing the 3GPP network via the non-3GPP access network", so as to receive the information corresponding to the registration operation according to the registration operation performed by the terminal, which may improve the accuracy of authentication of accessing the 3GPP network via the non-3GPP access network.

Fig. 14 is a flow chart of an authentication method for accessing a 3GPP network via a non-3GPP access network provided by an embodiment of the present disclosure, which is performed by a N3IWF. As shown in Fig. 14, the method may include the following steps.

In step 1401, in response to that a registration operation performed by a terminal is performing a mobile registration update, a registration type sent by the terminal is received, in which the registration type is Mobile Registration Update.

In step 1402, the registration type corresponding to the registration operation is sent to an AMF.

To sum up, in this embodiment of the present disclosure, when the terminal accesses the 3GPP network via an untrusted non-3GPP access network, in response to that the registration operation performed by the terminal is performing the mobile registration update, the registration type sent by the terminal is received, in which the registration type is Mobile Registration Update, and the registration type corresponding to the registration operation is sent to the AMF. In this embodiment of the present disclosure, according to the registration operation performed by the terminal, information corresponding to the registration operation is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the registration type corresponding to the mobile registration update. The present disclosure provides a processing method for the case of "authentication of accessing the 3GPP network via the non-3GPP access network", so as to receive the information corresponding to the registration operation according to the registration operation performed by the terminal, which may improve the accuracy of authentication of accessing the 3GPP network via the non-3GPP access network.

Fig. 15 is a flow chart of an authentication method for accessing a 3GPP network via a non-3GPP access network provided by an embodiment of the present disclosure, which is performed by a N3IWF. As shown in Fig. 15, the method may include the following steps.

In step 1501, in a non-public network (NPN) scenario, in response to that an extensible authentication protocol (EAP) method supports SUPI privacy, an anonymous SUCI sent by a terminal according to configuration information of the terminal is received.

In step 1502: the anonymous SUCI is sent to an AMF.

In an embodiment of the present disclosure, the anonymous SUCI is an anonymous SUCI obtained by ignoring a username part in an original SUCI.

In an embodiment of the present disclosure, the anonymous SUCI is an anonymous SUCI obtained by setting a username part in an original SUCI to anonymous.

In an embodiment of the present disclosure, the method further includes:
receiving at least one N3IWF key (K_{N3IWF}), at least one SUCI and/or at least one SUCI generation algorithm sent by the AMF; and
storing a mapping relationship between the at least one K_{N3IWF} and the at least one SUCI.

In an embodiment of the present disclosure, the method further includes:
sending an SUCI generation algorithm to the terminal;
receiving an SUCI sent by the terminal, in which the SUCI is generated according to the SUCI generation algorithm;
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

In an embodiment of the present disclosure, the method further includes:
receiving an SUCI sent by the terminal in response to not sending an SUCI generation algorithm to the terminal;
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

In an embodiment of the present disclosure, the method further includes:
receiving the SUCI sent by the terminal in response to not sending the SUCI generation algorithm to the terminal;
in a case that the K_{N3IWF} corresponding to the SUCI is not determined according to the SUCI and the mapping relationship between the at least one K_{N3IWF} and the at least one SUCI, sending the SUCI to the AMF;
receiving the K_{N3IWF} corresponding to the SUCI, determined according to the SUCI and sent by the AMF; and
authenticating the terminal according to the K_{N3IWF} corresponding to the SUCI.

To sum up, in these embodiments of the present disclosure, in the non-public network (NPN) scenario, in response to that the extensible authentication protocol (EAP) method supports the SUPI privacy, the anonymous SUCI sent by the terminal according to the configuration information of the terminal is received, and the anonymous SUCI is sent to the AMF. In these embodiments of the present disclosure, in response to that the EAP method supports the SUPI privacy, the anonymous SUCI is sent to the N3IWF according to the configuration information of the terminal, and the N3IWF may send the anonymous SUCI to the AMF, which may improve the accuracy of authentication of accessing the 3GPP network via the non-3GPP access network, and enables the terminal to access the 3GPP network via the non-3GPP access network. These embodiments of the present disclosure specifically disclose a scheme of receiving the anonymous SUCI sent by the terminal according to the configuration information of the terminal. The present disclosure provides a processing method for the case of "authentication of accessing the 3GPP network via the non-3GPP access network", so as to receive at least one of a registration type, a user identifier and an identifier of a non-public network, that the terminal needs to register with, corresponding to the registration operation, according to a registration operation performed by the terminal, which may improve the accuracy of authentication of accessing the 3GPP network via the non-3GPP access network.

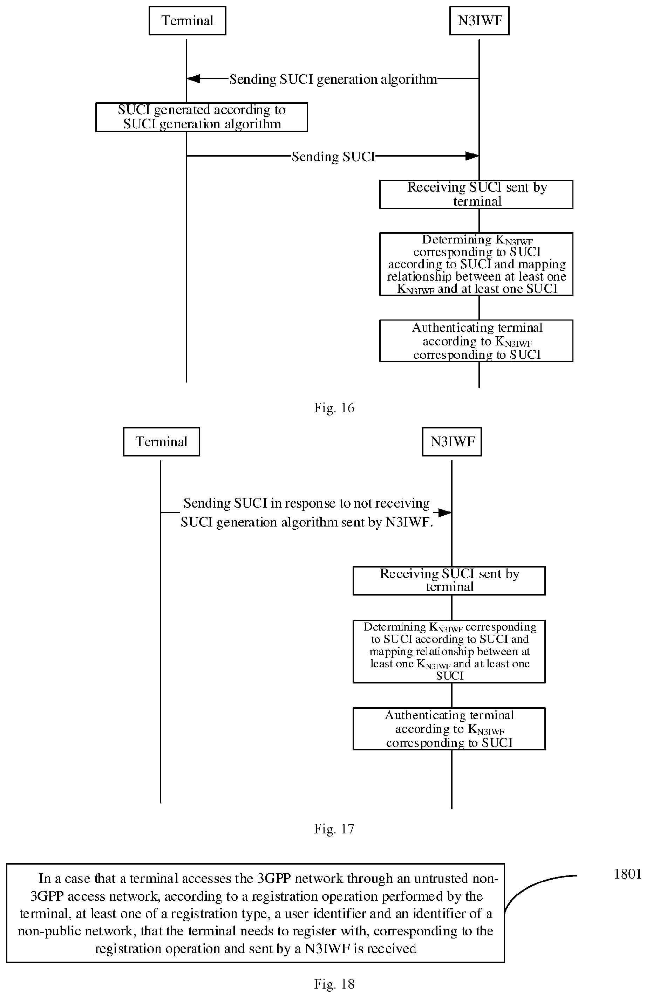

Fig. 16 is a schematic interaction diagram of an authentication method for accessing a 3GPP network via a non-3GPP access network provided by an embodiment of the present disclosure. As shown in Fig. 16, the method may include the following steps.

In step 1601, a N3IWF sends an SUCI generation algorithm to a terminal.

In step 1602, the terminal generates an SUCI according to the SUCI generation algorithm and sends the SUCI to the N3IWF.

In step 1603, the N3IWF receives the SUCI sent by the terminal, in which the SUCI is generated according to the SUCI generation algorithm.

In step 1604, the N3IWF determines a K_{N3IWF} corresponding to the SUCI according to the SUCI and a mapping relationship between at least one K_{N3IWF} and at least one SUCI.

In step 1605, the N3IWF authenticates the terminal according to the K_{N3IWF} corresponding to the SUCI.

To sum up, in this embodiment of the present disclosure, the SUCI generation algorithm is sent to the terminal; the SUCI sent by the terminal is received, in which the SUCI is generated according to the SUCI generation algorithm; the K_{N3IWF} corresponding to the SUCI is determined according to the SUCI and the mapping relationship between the at least one K_{N3IWF} and the at least one SUCI; and the terminal is authenticated according to the K_{N3IWF} corresponding to the SUCI. In this embodiment of the present disclosure, the K_{N3IWF} corresponding to the SUCI is determined according to the SUCI sent by the terminal, which may improve the accuracy of authentication of accessing the 3GPP network via the non-3GPP access network, and enables the terminal to access the 3GPP network via the non-3GPP access network. This embodiment of the present disclosure specifically discloses a scheme of receiving an anonymous SUCI sent by the terminal according to configuration information of the terminal. The present disclosure provides a processing method for the case of "authentication of accessing the 3GPP network via the non-3GPP access network", so as to receive at least one of a registration type, a user identifier and an identifier of a non-public network, that the terminal needs to register with, corresponding to the registration operation, according to a registration operation performed by the terminal, which may improve the accuracy of authentication of accessing the 3GPP network via the non-3GPP access network.

Fig. 17 is a schematic interaction diagram of an authentication method for accessing a 3GPP network via a non-3GPP access network provided by an embodiment of the present disclosure. As shown in Fig. 17, the method may include the following steps.

In step 1701, in response to not receiving an SUCI generation algorithm sent by a N3IWF, a terminal sends an SUCI to the N3IWF.

In step 1702, in response to not sending the SUCI generation algorithm to the terminal, the N3IWF receives the SUCI sent by the terminal.

In step 1703, the N3IWF determines a K_{N3IWF} corresponding to the SUCI according to the SUCI and a mapping relationship between at least one K_{N3IWF} and at least one SUCI.

In step 1704, the N3IWF authenticates the terminal according to the K_{N3IWF} corresponding to the SUCI.

To sum up, in this embodiment of the present disclosure, in response to not sending the SUCI generation algorithm to the terminal, the SUCI sent by the terminal is received; the N3IWF determines the K_{N3IWF} corresponding to the SUCI according to the SUCI and the mapping relationship between the at least one K_{N3IWF} and the at least one SUCI; the N3IWF authenticates the terminal according to the K_{N3IWF} corresponding to the SUCI. In this embodiment of the present disclosure, the K_{N3IWF} corresponding to the SUCI is determined according to the SUCI sent by the terminal, which may improve the accuracy of authentication of accessing the 3GPP network via the non-3GPP access network, and enables the terminal to access the 3GPP network via the non-3GPP access network. This embodiment of the present disclosure specifically discloses a scheme of receiving an anonymous SUCI sent by the terminal according to configuration information of the terminal. The present disclosure provides a processing method for the case of "authentication of accessing the 3GPP network via the non-3GPP access network", so as to receive at least one of a registration type, a user identifier and an identifier of a non-public network, that the terminal needs to register with, corresponding to the registration operation, according to a registration operation performed by the terminal, which may improve the accuracy of authentication of accessing the 3GPP network via the non-3GPP access network.

Fig. 18 is a flow chart of an authentication method for accessing a 3GPP network via a non-3GPP access network provided by an embodiment of the present disclosure, which is performed by an AMF. As shown in Fig. 18, the method may include the following steps.

In step 1801, in a case that a terminal accesses the 3GPP network via an untrusted non-3GPP access network, according to a registration operation performed by the terminal, at least one of a registration type, a user identifier and an identifier of a non-public network, that the terminal needs to register with, corresponding to the registration operation and sent by a N3IWF is received.

In an embodiment of the present disclosure, receiving the user identifier corresponding to the registration operation sent by the N3IWF according to the registration operation performed by the terminal includes:
in response to that the registration operation performed by the terminal is an SNPN onboarding registration, receiving at least one of following user identifiers sent by the N3IWF:
an onboarding SUCI; and
an onboarding SUPI.

In an embodiment of the present disclosure, according to the registration operation performed by the terminal, receiving the user identifier corresponding to the registration operation sent by the N3IWF includes:
in response to that the registration operation is an initial registration or a mobile registration update, receiving at least one of following user identifiers sent by the N3IWF:
an SUCI; and
an SUPI.

In an embodiment of the present disclosure, according to the registration operation performed by the terminal, receiving the registration type corresponding to the registration operation sent by the N3IWF includes at least one of:
in response to that the registration operation performed by the terminal is performing an SNPN onboarding registration, receiving a registration type sent by the N3IWF, in which the registration type is SNPN Onboarding;
in response to that the registration operation performed by the terminal is performing an initial registration, receiving a registration type sent by the N3IWF, in which the registration type is Initial Registration; and
in response to that the registration operation performed by the terminal is performing a mobile registration update, receiving a registration type sent by the N3IWF, in which the registration type is Mobile Registration Update.

In an embodiment of the present disclosure, the method further includes:
applying AMF configuration data configured locally to onboarding, in which the AMF configuration data is used to limit a network application of the terminal to onboarding only; and
storing indication information in a context of the terminal in the AMF, in which the indication information is used to indicate that the terminal has completed onboarding registration.

In an embodiment of the present disclosure, the method further includes:
based on an onboarding-SNPN (ON-SNPN) policy, a timer for realizing specific logout is started, in which the timer is configured for onboarding of the terminal.

For example, in an embodiment of the present disclosure, according to the performed registration operation, receiving the user identifier corresponding to the registration operation and sent by the N3IWF includes:
in an non-public network (NPN) scenario, in response to that an extensible authentication protocol (EAP) method supports SUPI privacy, receiving an anonymous SUCI sent by the N3IWF, in which the anonymous SUCI is an anonymous SUCI sent by the terminal to the N3IWF according to configuration information of the terminal.

Further, in an embodiment of the present disclosure, the anonymous SUCI is an anonymous SUCI obtained by ignoring a username part in an original SUCI.

Further, in an embodiment of the present disclosure, the anonymous SUCI is an anonymous SUCI obtained by setting a username part in an original SUCI to anonymous.

Further, in an embodiment of the present disclosure, the method further includes:
authenticating the terminal in at least one of following authentication methods:
a 5G AKA authentication method;
an EAP-AKA' authentication method; and
a key-generating EAP authentication method.

Further, in an embodiment of the present disclosure, the method further includes:
receiving a security anchor function (SEAF) key (K_{SEAF}), an SUPI, an SUCI and/or an SUCI generation algorithm sent by an AUSF;
generating an AMF key (K_{AMF}) according to the K_{SEAF} and the SUPI; and
generating a K_{N3IWF} according to the K_{AMF}, and store mapping relationships among the SUPI, the SUCI and the K_{N3IWF}.

Further, in an embodiment of the present disclosure, after completing the authentication of the terminal by a 3GPP network or a default voucher server, the AUSF obtains the SUPI of the terminal, and also encrypts an SUPI of a user into an SUCI, and generates a K_{SEAF}. The AUSF sends the generated K_{SEAF}, the SUCI generation algorithm, the SUPI and the SUCI to the AMF or the SEAF, in which the AMF or the SEAF are generally combined, that is, the AMF or the SEAF is one device. The SEAF may generate a K_{AMF} according to the K_{SEAF} and the SUPI of the user. The AMF generates a K_{N3IWF} according to the K_{AMF}.

Further, in an embodiment of the present disclosure, the method further includes:
sending at least one K_{N3IWF}, at least one SUCI and/or at least one SUCI generation algorithm to the N3IWF.

Further, in an embodiment of the present disclosure, the method further includes:
receiving an SUCI sent by the N3IWF, in which the SUCI is an SUCI which is sent by the terminal to the N3IWF, and a K_{N3IWF} corresponding to which has not determined the by the N3IWF;
sending the SUCI to the AUSF;
receiving an SUPI sent by the AUSF for the SUCI, and determining the K_{N3IWF} corresponding to the SUCI according to the SUPI; and
sending the K_{N3IWF} corresponding to the SUCI to the N3IWF.

For example, in an embodiment of the present disclosure, when the N3IWF receives the SUPI sent by the AUSF for the SUCI, the N3IWF may position the K_{N3IWF} through the SUPI, and then use the K_{N3IWF} to establish an IPsec SA with the terminal.

For example, in an embodiment of the present disclosure, it is optional for the AMF to send the SUCI generation algorithm to the N3IWF every time, that is, the AMF may send the SUCI generation algorithm to the N3IWF every time, or the AMF may also not send the SUCI generation algorithm to the N3IWF every time.

For example, in an embodiment of the present disclosure, it is optional for the AUSF to send the SUCI generation algorithm to the AMF every time, that is, the AUSF may send the SUCI generation algorithm to the AMF every time, or the AUSF may also not send the SUCI generation algorithm to the AMF every time.

To sum up, in these embodiments of the present disclosure, when the terminal accesses the 3GPP network via the untrusted non-3GPP access network, according to the registration operation performed by the terminal, at least one of the registration type, the user identifier and the identifier of the non-public network, that the terminal needs to register with, corresponding to the registration operation and sent by the N3IWF is received. In these embodiments of the present disclosure, according to the registration operation performed by the terminal, information corresponding to the registration operation and sent by the N3IWF is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. The present disclosure provides a processing method for the case of "authentication of accessing the 3GPP network via the non-3GPP access network", so as to receive the information corresponding to the registration operation and sent by the N3IWF according to the registration operation performed by the terminal, which may improve the accuracy of authentication of accessing the 3GPP network via the non-3GPP access network.

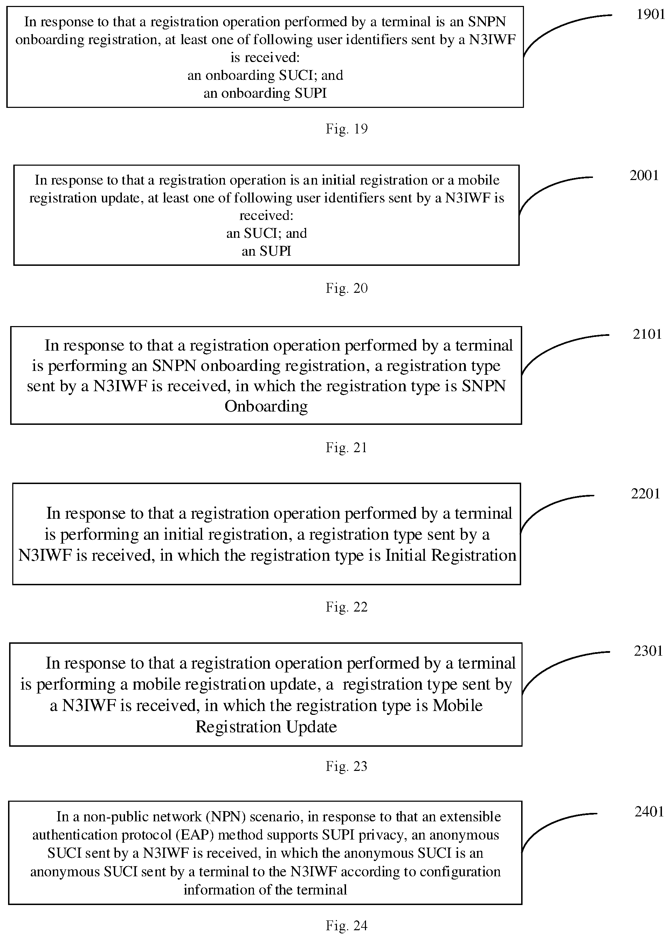

Fig. 19 is a flow chart of an authentication method for accessing a 3GPP network via a non-3GPP access network provided by an embodiment of the present disclosure, which is performed by an AMF. As shown in Fig. 19, the method may include the following steps.

In step 1901, in response to that a registration operation performed by a terminal is an SNPN onboarding registration, at least one of following user identifiers sent by a N3IWF is received:
an onboarding SUCI; and
an onboarding SUPI.

To sum up, in this embodiment of present disclosure, in response to that the registration operation performed by the terminal is the SNPN onboarding registration, at least one of the following user identifiers sent by the N3IWF is received: the onboarding SUCI; and the onboarding SUPI. In this embodiment of the present disclosure, according to the registration operation performed by the terminal, the user identifier corresponding to the registration operation sent by the N3IWF is received, which reduces the mismatch between the received user identifier and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the user identifier corresponding to the SNPN onboarding registration. The present disclosure provides a processing method for the case of "authentication of accessing the 3GPP network via the non-3GPP access network", so as to receive information corresponding to the registration operation and sent by the N3IWF according to the registration operation performed by the terminal, which may improve the accuracy of authentication of accessing the 3GPP network via the non-3GPP access network.

Fig. 20 is a flow chart of an authentication method for accessing a 3GPP network via a non-3GPP access network provided by an embodiment of the present disclosure, which is performed by an AMF. As shown in Fig. 20, the method may include the following steps.

In step 2001, in response to that a registration operation is an initial registration or a mobile registration update, at least one of following user identifiers sent by a N3IWF is received:
an SUCI; and
an SUPI.

To sum up, in this embodiment of present disclosure, when the terminal accesses the 3GPP network via an untrusted non-3GPP access network, in response to that the registration operation is the initial registration or the mobile registration update, at least one of the following user identifiers sent by the N3IWF is received: the SUCI; and the SUPI. In this embodiment of the present disclosure, according to the registration operation performed by the terminal, the user identifier corresponding to the registration operation and sent by the N3IWF is received, which reduces the mismatch between the received user identifier and the registration operation performed by the terminal is reduced, improves the accuracy of authentication of accessing the 3GPP network via the non-3GPP access network, and enables the terminal to access the 3GPP network via the non-3GPP access network. This embodiment of the present disclosure specifically discloses a scheme of the user identifier corresponding to the initial registration or the mobile registration update. The present disclosure provides a processing method for the case of "authentication of accessing the 3GPP network via the non-3GPP access network", so as to receive information corresponding to the registration operation and sent by the N3IWF according to the registration operation performed by the terminal, which may improve the accuracy of authentication of accessing the 3GPP network via the non-3GPP access network.

Fig. 21 is a flow chart of an authentication method for accessing a 3GPP network via a non-3GPP access network provided by an embodiment of the present disclosure, which is performed by an AMF. As shown in Fig. 21, the method may include the following steps.

In step 2101, in response to that a registration operation performed by a terminal is performing an SNPN onboarding registration, a registration type sent by a N3IWF is received, in which the registration type is SNPN Onboarding.

In an embodiment of the present disclosure, the method further includes: the AMF applying AMF configuration data configured locally to onboarding, in which the AMF configuration data is used to limit a network application of the terminal to onboarding only; and storing indication information in a context of the terminal in the AMF, in which the indication information is used to indicate that the terminal has completed onboarding registration.

In an embodiment of the present disclosure, the method further includes: based on an ON-SNPN policy, the AMF starting a timer for realizing specific logout, in which the timer is configured for onboarding of the terminal.

To sum up, in these embodiments of the present disclosure, when the terminal accesses the 3GPP network via an untrusted non-3GPP access network, in response to that the registration operation performed by the terminal is performing the SNPN onboarding registration, the registration type sent by the N3IWF is received, in which the registration type is SNPN Onboarding. In these embodiments of the present disclosure, according to the registration operation performed by the terminal, the registration type corresponding to the registration operation sent by the N3IWF is received, which reduces the mismatch between the received registration type and the registration operation performed by the terminal, improves the accuracy of authentication of accessing the 3GPP network via the non-3GPP access network, and enables the terminal to access the 3GPP network via the non-3GPP access network. These embodiments of the present disclosure specifically disclose a scheme of the registration type corresponding to the SNPN onboarding registration. The present disclosure provides a processing method for the case of "authentication of accessing the 3GPP network via the non-3GPP access network", so as to receive information corresponding to the registration operation and sent by the N3IWF according to the registration operation performed by the terminal, which may improve the accuracy of authentication of accessing the 3GPP network via the non-3GPP access network.

Fig. 22 is a flow chart of an authentication method for accessing a 3GPP network via a non-3GPP access network provided by an embodiment of the present disclosure, which is performed by an AMF. As shown in Fig. 22, the method may include the following steps.

In step 2201, in response to that a registration operation performed by a terminal is performing an initial registration, a registration type sent by a N3IWF is received, in which the registration type is Initial Registration.

To sum up, in this embodiment of the present disclosure, when the terminal accesses the 3GPP network via an untrusted non-3GPP access network, in response to that the registration operation performed by the terminal is performing the initial registration, the registration type sent by the N3IWF is received, in which the registration type is Initial Registration. In this embodiment of the present disclosure, according to the registration operation performed by the terminal, the registration type corresponding to the registration operation sent by the N3IWF is received, which reduces the mismatch between the received registration type and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the registration type corresponding to the initial registration. The present disclosure provides a processing method for the case of "authentication of accessing the 3GPP network via the non-3GPP access network", so as to receive the registration type corresponding to the registration operation and sent by the N3IWF according to the registration operation performed by the terminal, which may improve the accuracy of authentication of accessing the 3GPP network via the non-3GPP access network.

Fig. 23 is a flow chart of an authentication method for accessing a 3GPP network via a non-3GPP access network provided by an embodiment of the present disclosure, which is performed by an AMF. As shown in Fig. 23, the method may include the following steps.

In step 2301, in response to that a registration operation performed by a terminal is performing a mobile registration update, a registration type sent by a N3IWF is received, in which the registration type is Mobile Registration Update.

To sum up, in this embodiment of present disclosure, when the terminal accesses the 3GPP network via an untrusted non-3GPP access network, in response to that the registration operation performed by the terminal is performing the mobile registration update, the registration type sent by the N3IWF is received, in which the registration type is Mobile Registration Update. In this embodiment of the present disclosure, according to the registration operation performed by the terminal, the registration type corresponding to the registration operation and sent by the N3IWF is received, which reduces the mismatch between the received registration type and the registration operation performed by the terminal, improves the accuracy of authentication of accessing the 3GPP network via the non-3GPP access network, and enables the terminal to access the 3GPP network via the non-3GPP access network. This embodiment of the present disclosure specifically discloses a scheme of the registration type corresponding to the mobile registration update. The present disclosure provides a processing method for the case of "authentication of accessing the 3GPP network via the non-3GPP access network", so as to receive the registration type corresponding to the registration operation and sent by the N3IWF according to the registration operation performed by the terminal, which may improve the accuracy of authentication of accessing the 3GPP network via the non-3GPP access network.

Fig. 24 is a flow chart of an authentication method for accessing a 3GPP network via a non-3GPP access network provided by an embodiment of the present disclosure, which is performed by an AMF. As shown in Fig. 24, the method may include the following steps.

In step 2401, in a non-public network (NPN) scenario, in response to that an extensible authentication protocol (EAP) method supports SUPI privacy, an anonymous SUCI sent by a N3IWF is received, in which the anonymous SUCI is an anonymous SUCI sent by a terminal to the N3IWF according to configuration information of the terminal.

In an embodiment of the present disclosure, the anonymous SUCI is an anonymous SUCI obtained by ignoring a username part in an original SUCI.

In an embodiment of the present disclosure, the anonymous SUCI is an anonymous SUCI obtained by setting a username part in an original SUCI to anonymous.

In an embodiment of the present disclosure, the method further includes:
the AMF authenticating the terminal in at least one of following authentication methods:
a 5G AKA authentication method;
an EAP-AKA' authentication method; and
a key-generating EAP authentication method.

Further, in an embodiment of the present disclosure, the method further includes:
receiving a security anchor function (SEAF) key (K_{SEAF}), an SUPI, an SUCI and/or an SUCI generation algorithm sent by an authentication service function (AUSF);
generating an AMF key (K_{AMF}) according to the K_{SEAF} and the SUPI; and
generating a N3IWF key (K_{N3IWF}) according to the K_{AMF}, and storing mapping relationships among the SUPI, the SUCI and the K_{N3IWF}.

In an embodiment of the present disclosure, the AMF stores the mapping relationships among the SUPI, the SUCI and the K_{N3IWF} for the AMF to search the K_{N3IWF} according to the SUPI or the SUCI, thus improving the convenience of searching the K_{N3IWF}.

Further, in an embodiment of the present disclosure, the method further includes:
sending at least one K_{N3IWF}, at least one SUCI and/or at least one SUCI generation algorithm to the N3IWF.

Further, in an embodiment of the present disclosure, the method further includes:
receiving an SUCI sent by the N3IWF, in which the SUCI is an SUCI which is sent by the terminal to the N3IWF, and a K_{N3IWF} corresponding to which has not been determined by the N3IWF;
sending the SUCI to the AUSF;
receiving an SUPI sent by the AUSF for the SUCI, and determining the K_{N3IWF} corresponding to the SUCI according to the SUPI; and
sending the K_{N3IWF} corresponding to the SUCI to the N3IWF.

For example, in an embodiment of the present disclosure, when the N3IWF receives the SUPI sent by the AUSF for the SUCI, the N3IWF may position the K_{N3IWF} through the SUPI, and then use the K_{N3IWF} to establish an IPsec SA with the terminal.

To sum up, in these embodiments of the present disclosure, in the non-public network (NPN) scenario, the anonymous SUCI sent by the N3IWF is received in response to that the extensible authentication protocol (EAP) method supports the SUPI privacy, in which the anonymous SUCI is the anonymous SUCI sent to the N3IWF by the terminal according to configuration information of the terminal. In these embodiments of the present disclosure, in response to that the EAP method supports the SUPI privacy, the anonymous SUCI sent by the N3IWF is received, and the anonymous SUCI is the anonymous SUCI sent by the terminal to the N3IWF according to the configuration information of the terminal, which may improve the accuracy of authentication of accessing the 3GPP network via the non-3GPP access network, and enables the terminal to access the 3GPP network via the non-3GPP access network. These embodiments of the present disclosure specifically disclose a scheme of receiving the anonymous SUCI sent by the N3IWF. The present disclosure provides a processing method for the case of "authentication of accessing the 3GPP network via the non-3GPP access network", so as to receive at least one of a registration type, a user identifier and an identifier of a non-public network, that the terminal needs to register with, corresponding the registration operation, according to a registration operation performed by the terminal, which may improve the accuracy of authentication of accessing the 3GPP network via the non-3GPP access network.

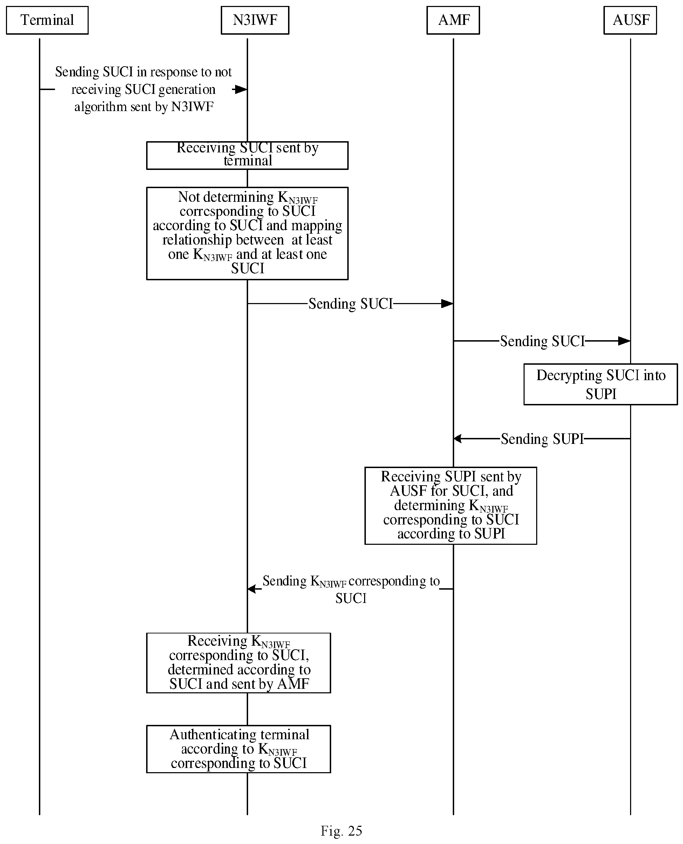

Fig. 25 is a schematic interaction diagram of an authentication method for accessing a 3GPP network via a non-3GPP access network provided by an embodiment of the present disclosure. As shown in Fig. 25, the method may include the following steps.

In step 2501, in response to not receiving an SUCI generation algorithm sent by a N3IWF, a terminal sends an SUCI to the N3IWF.

In step 2502, in response to not sending the SUCI generation algorithm to the terminal, the N3IWF receives the SUCI sent by the terminal.

In step 2503, the N3IWF sends the SUCI to an AMF, in a case that the N3IWF does not determine a K_{N3IWF} corresponding to the SUCI according to the SUCI and a mapping relationship between at least one K_{N3IWF} and at least one SUCI.

In step 2504, the AMF receives the SUCI sent by the N3IWF, in which the SUCI is the SUCI which is sent by the terminal to the N3IWF, and the K_{N3IWF} corresponding to which has not been determined by the N3IWF.

In step 2505, the AMF sends the SUCI to an AUSF.

In step 2506, the AUSF decrypts the SUCI into an SUPI and sends the SUPI to the AMF.

In step 2507, the AMF receives the SUPI sent by the AUSF for the SUCI, and determines the K_{N3IWF} corresponding to the SUCI according to the SUPI.

In step 2508, the AMF sends the K_{N3IWF} corresponding to the SUCI to the N3IWF.

In step 2509, the N3IWF receives the K_{N3IWF} corresponding to the SUCI, determined according to the SUCI and sent by the AMF.

In step 2510, the N3IWF authenticates the terminal according to the K_{N3IWF} corresponding to the SUCI.

To sum up, in this embodiment of the present disclosure, when the N3IWF does not determine the K_{N3IWF} corresponding to the SUCI according to the mapping relationship, it may receive the K_{N3IWF} sent by the AMF, which may improve the accuracy of authentication of accessing the 3GPP network via the non-3GPP access network, and enables the terminal to access the 3GPP network via the non-3GPP access network.

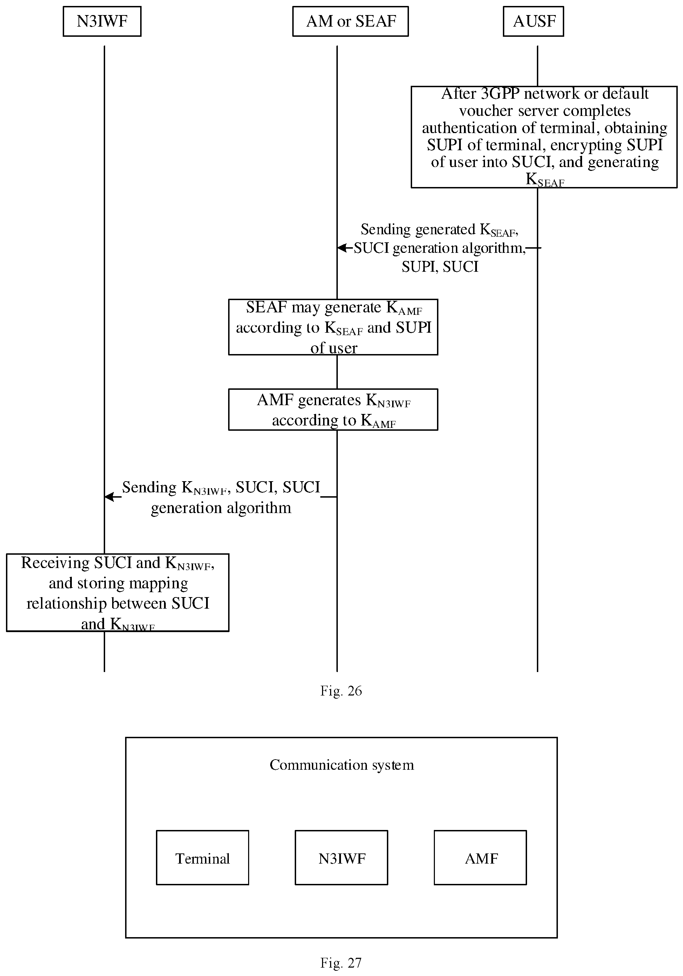

Fig. 26 is a schematic interaction diagram of an authentication method for accessing a 3GPP network via a non-3GPP access network provided by an embodiment of the present disclosure. As shown in Fig. 26, the method may include the following steps.

In step 2601, after a 3GPP network or a default voucher server completes authentication of a terminal, an AUSF obtains an SUPI of the terminal, and the AUSF encrypts an SUPI of a user into an SUCI and generates a K_{SEAF}.

In step 2602, the AUSF sends the generated K_{SEAF}, an SUCI generation algorithm, an SUPI and an SUCI to an AMF or an SEAF.

In step 2603, the SEAF may generate a K_{AMF} according to the K_{SEAF} and the SUPI of the user.

In step 2604, the AMF generates a K_{N3IWF} according to the K_{AMF}.

In step 2605, the AMF sends the K_{N3IWF}, the SUCI and the SUCI generation algorithms to the N3IWF.

In step 2606, the N3IWF receives the SUCI and the K_{N3IWF}, and stores a mapping relationship between the SUCI and the K_{N3IWF}.

In an embodiment of the present disclosure, the AMF or the SEAF are generally combined, that is, the AMF or the SEAF are one device.

In an embodiment of the present disclosure, the transmission of the SUCI generation algorithm is optional, that is, it may be transmitted or not. For example, the AUSF may send the SUCI generation algorithm to the AMF or the SEAF, or the AUSF may not send the SUCI generation algorithm to the AMF or the SEAF. For example, the AMF or the SEAF may send the SUCI generation algorithm to the N3IWF, or the AMF or the SEAF may not send the SUCI generation algorithm to the N3IWF. For example, the N3IWF may send the SUCI generation algorithm to the terminal, or the N3IWF may not send the SUCI generation algorithm to the terminal.

To sum up, in these embodiments of present disclosure, the N3IWF stores the SUCI, the K_{N3IWF}, and the mapping relationship between the SUCI and the K_{N3IWF}, which may reduce the time for the N3IWF to determine the K_{N3IWF} corresponding to the SUCI when receiving the SUCI sent by the terminal, thus increasing the convenience for determining the K_{N3IWF} corresponding to the SUCI, improve the accuracy of authentication of accessing the 3GPP network via the non-3GPP access network, and enable the terminal to access the 3GPP network via the non-3GPP access network.

Fig. 27 is a schematic architecture diagram of a communication system provided by an embodiment of the present disclosure. As shown in Fig. 27, the system includes:
a terminal configured to, according to a performed registration operation, send at least one of a registration type, a user identifier and an identifier of a non-public network, that the terminal needs to register with, corresponding the registration operation to a N3IWF, when the terminal accesses a 3GPP network via an untrusted non-3GPP access network;
the N3IWF configured to, according to the registration operation performed by the terminal, receive the at least one of the registration type, the user identifier and the identifier of the non-public network, that the terminal needs to register with, corresponding to the registration operation and sent by the terminal, and send the at least one of the registration type, the user identifier and the identifier of the non-public network, that the terminal needs to register with, corresponding to the registration operation to an AMF; and
the AMF configured to, according to the registration operation performed by the terminal, receive the at least one of the registration type, the user identifier and the identifier of the non-public network, that the terminal needs to register with, corresponding to the registration operation and sent by the N3IWF.

To sum up, in the communication system of this embodiment of the present disclosure, when the terminal accesses the 3GPP network via the untrusted non-3GPP access network, the terminal may send the at least one of the registration type, the user identifier and the identifier of the non-public network, that the terminal needs to register with, corresponding to the registration operation to the N3IWF according to the registration operation performed by the terminal; the N3IWF may receive the at least one of the registration type, the user identifier and the identifier of the non-public network, that the terminal needs to register with, corresponding to the registration operation and sent by the terminal, and send the at least one of the registration type, the user identifier and the identifier of the non-public network, that the terminal needs to register with, corresponding to the registration operation to the AMF; and the AMF may receive the at least one of the registration type, the user identifier and the identifier of the non-public network, that the terminal needs to register with, corresponding to the registration operation and sent by the N3IWF according to the registration operation performed by the terminal. In this embodiment of the present disclosure, according to the registration operation performed by the terminal, information corresponding to the registration operation is sent, which reduces the mismatch between the sent information and the registration operation performed by the terminal, improves the accuracy of authentication of accessing the 3GPP network via the non-3GPP access network, and enables the terminal to access the 3GPP network via the non-3GPP access network. The present disclosure provides a processing apparatus for the case of "authentication of accessing the 3GPP network via the non-3GPP access network", so as to send the information corresponding to the registration operation according to the registration operation performed by the terminal, which may improve the accuracy of authentication of accessing the 3GPP network via the non-3GPP access network.

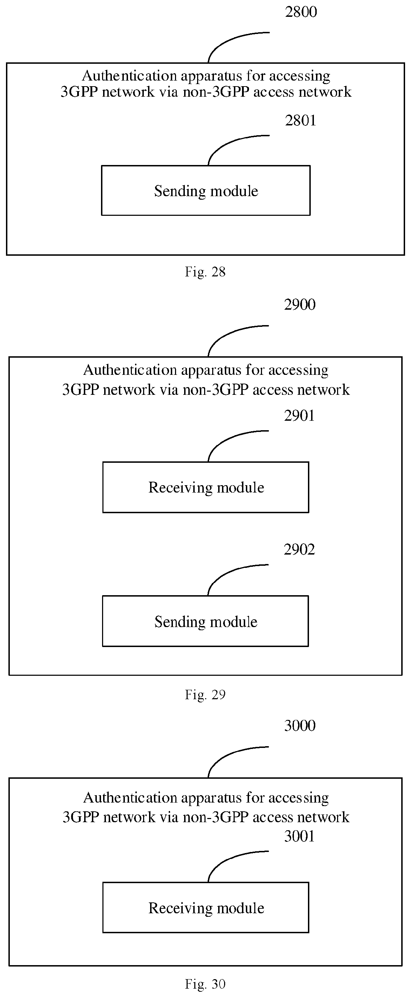

Fig. 28 is a schematic diagram of an apparatus 2800 for authentication of accessing a 3GPP network via a non-3GPP access network provided by an embodiment of the present disclosure. As shown in Fig. 28, the apparatus 2800 may be arranged at a terminal side, and the apparatus 2800 may include:
a sending module 2801 configured to, according to a performed registration operation, send at least one of a registration type, a user identifier and an identifier of a non-public network, that the terminal needs to register with, corresponding to the registration operation to a non-3GPP interworking function (N3IWF), when the terminal accesses the 3GPP network via an untrusted non-3GPP access network.

To sum up, in the authentication apparatus for accessing the 3GPP network via the non-3GPP access network in this embodiment of the present disclosure, in a case that the terminal accesses the 3GPP network through the untrusted non-3GPP, the sending module sends the at least one of the registration type, the user identifier and the identifier of the non-public network, that the terminal needs to register with, to the N3IWF according to the performed registration operation. In this embodiment of the present disclosure, according to the registration operation performed by the terminal, information corresponding to the registration operation is sent to the N3IWF, which reduces the mismatch between the sent information and the registration operation performed by the terminal, improves the accuracy of authentication of accessing the 3GPP network via the non-3GPP access network, and enables the terminal to access the 3GPP network via the non-3GPP access network. The present disclosure provides a processing apparatus for the case of "authentication of accessing the 3GPP network via the non-3GPP access network", so as to send the information corresponding to the registration operation to the N3IWF according to the registration operation performed by the terminal, which may improve the accuracy of authentication of accessing the 3GPP network via the non-3GPP access network.

Optionally, in an embodiment of the present disclosure, when sending the user identifier corresponding to the registration operation to the N3IWF according to the performed registration operation, the sending module 2801 is specifically configured to:
in response to that the performed registration operation is an SNPN onboarding registration, send at least one of following user identifiers to the N3IWF:
an onboarding SUCI; and
an onboarding SUPI.

Optionally, in an embodiment of the present disclosure, when sending the user identifier corresponding to the registration operation to the N3IWF according to the performed registration operation, the sending module 2801 is specifically configured to:
in response to that the performed registration operation is performing an initial registration or a mobile registration update, send at least one of following user identifiers to the N3IWF:
an SUCI; and
an SUPI.

Optionally, in an embodiment of the present disclosure, when sending the registration type corresponding to the registration operation to the N3IWF according to the performed registration operation, the sending module 2801 is specifically configured to perform at least one of:
in response to that the performed registration operation is performing an SNPN onboarding registration, sending a registration type to the N3IWF, in which the registration type is SNPN Onboarding;
in response to that the performed registration operation is performing an initial registration, sending a registration type to the N3IWF, in which the registration type is Initial Registration; and
in response to that the performed registration operation is performing a mobile registration update, sending a registration type to the N3IWF, in which the registration type is Mobile Registration Update.

Optionally, in an embodiment of the present disclosure, when sending the user identifier corresponding to the registration operation to the N3IWF according to the performed registration operation, the sending module 2801 is specifically configured to:
in a non-public network (NPN) scenario, in response to that an extensible authentication protocol (EAP) method supports SUPI privacy, send an anonymous SUCI to the N3IWF according to configuration information of the terminal.

Optionally, in an embodiment of the present disclosure, the anonymous SUCI is an anonymous SUCI obtained by ignoring a username part in an original SUCI.

Optionally, in an embodiment of the present disclosure, the anonymous SUCI is an anonymous SUCI obtained by setting a username part in an original SUCI to anonymous.

Optionally, in an embodiment of the present disclosure, the sending module 2801 is further configured to:
receive an SUCI generation algorithm sent by the N3IWF; and
generate an SUCI according to the SUCI generation algorithm and send the SUCI to the N3IWF.

Optionally, in an embodiment of the present disclosure, the sending module 2801 is further configured to:
send the SUCI to the N3IWF in response to not receiving the SUCI generation algorithm sent by the N3IWF.

Fig. 29 is a schematic diagram of an apparatus 2900 for authentication of accessing a 3GPP network via a non-3GPP access network provided by an embodiment of the present disclosure. As shown in Fig. 29, the apparatus 2900 may be arranged at a N3IWF side, and the apparatus 2900 may include:
a receiving module 2901 configured to, according to a registration operation performed by a terminal, receive at least one of a registration type, a user identifier and an identifier of a non-public network, that the terminal needs to register with, corresponding to the registration operation and sent by the terminal, when the terminal accesses the 3GPP network via an untrusted non-3GPP access network; and
a sending module 2902 configured to send the at least one of the registration type, the user identifier and the identifier of the non-public network, that the terminal needs to register with, corresponding to the registration operation to an access and mobility management function (AMF).

To sum up, in the authentication apparatus for accessing the 3GPP network via the non-3GPP access network in these embodiments of the present disclosure, when the terminal accesses the 3GPP network via the untrusted non-3GPP access network, the receiving module receives the at least one of the registration type, the user identifier and the identifier of the non-public network, that the terminal needs to register with, corresponding to the registration operation and sent by the terminal according to the registration operation performed by the terminal; and the sending module sends the at least one of the registration type, the user identifier and the identifier of the non-public network, that the terminal needs to register with, corresponding to the registration operation to the AMF. In these embodiments of the present disclosure, according to the registration operation performed by the terminal, information corresponding to the registration operation is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. The present disclosure provides a processing apparatus for the case of "authentication of accessing the 3GPP network via the non-3GPP access network", so as to receive the information corresponding to the registration operation according to the registration operation performed by the terminal, which may improve the accuracy of authentication of accessing the 3GPP network via the non-3GPP access network.

Optionally, in an embodiment of the present disclosure, when receiving the user identifier corresponding to the registration operation and sent by the terminal according to the registration operation performed by the terminal, the receiving module 2901 is specifically configured to:
in response to that the registration operation performed by the terminal is an SNPN onboarding registration, receive at least one of following user identifiers sent by the terminal:
an onboarding SUCI; and
an onboarding SUPI.

Optionally, in an embodiment of the present disclosure, when receiving the user identifier corresponding to the registration operation and sent by the terminal according to the registration operation performed by the terminal, the receiving module 2901 is specifically configured to:
in response to that the registration operation is an initial registration or a mobile registration update, receive at least one of following user identifiers sent by the terminal:
an SUCI; and
an SUPI.

Optionally, in an embodiment of the present disclosure, when receiving the registration type corresponding to the registration operation and sent by the terminal according to the registration operation performed by the terminal, the receiving module 2901 is specifically configured to performing at least one of:
in response to that the registration operation performed by the terminal is performing an SNPN onboarding registration, receiving a registration type sent by the terminal, in which the registration type is SNPN Onboarding;
in response to that the registration operation performed by the terminal is performing an initial registration, receiving a registration type sent by the terminal, in which the registration type is Initial Registration; and
in response to that the registration operation performed by the terminal is performing a mobile registration update, receiving a registration type sent by the terminal, in which the registration type is Mobile Registration Update.

Optionally, in an embodiment of the present disclosure, when receiving the user identifier corresponding to the registration operation and sent by the terminal according to the performed registration operation, the receiving module 2901 is specifically configured to:
in a non-public network (NPN) scenario, in response to that an extensible authentication protocol (EAP) method supports SUPI privacy, receive an anonymous SUCI sent by the terminal according to configuration information of the terminal.

Optionally, in an embodiment of the present disclosure, the anonymous SUCI is an anonymous SUCI obtained by ignoring a username part in an original SUCI.

Optionally, in an embodiment of the present disclosure, the anonymous SUCI is an anonymous SUCI obtained by setting a username part in an original SUCI to anonymous.

Optionally, in an embodiment of the present disclosure, the receiving module 2901 is further configured to:
receive at least one K_{N3IWF}, at least one SUCI and/or at least one SUCI generation algorithm sent by the AMF; and
store a mapping relationship between the at least one K_{N3IWF} and the at least one SUCI.

Optionally, in an embodiment of the present disclosure, the receiving module 2901 is further configured to:
send an SUCI generation algorithm to the terminal;
receive an SUCI sent by the terminal, in which the SUCI is generated according to the SUCI generation algorithm;
determine a K_{N3IWF} corresponding to the SUCI according to the SUCI and the mapping relationship between the at least one K_{N3IWF} and the at least one SUCI; and
authenticate the terminal according to the K_{N3IWF} corresponding to the SUCI.

Optionally, in an embodiment of the present disclosure, the receiving module 2901 is further configured to:
receive an SUCI sent by the terminal in response to not sending an SUCI generation algorithm to the terminal;
determine a K_{N3IWF} corresponding to the SUCI according to the SUCI and the mapping relationship between the at least one K_{N3IWF} and the at least one SUCI; and
authenticate the terminal according to the K_{N3IWF} corresponding to the SUCI.

Optionally, in an embodiment of the present disclosure, the receiving module 2901 is further configured to:
receive the SUCI sent by the terminal in response to not sending the SUCI generation algorithm to the terminal;
in a case that the K_{N3IWF} corresponding to the SUCI is not determined according to the SUCI and the mapping relationship between the at least one K_{N3IWF} and the at least one SUCI, send the SUCI to the AMF;
receive the K_{N3IWF} corresponding to the SUCI, determined according to the SUCI and sent by the AMF; and
authenticate the terminal according to the K_{N3IWF} corresponding to the SUCI.

Fig. 30 is a schematic diagram of an apparatus 3000 for authentication of accessing a 3GPP network via a non-3GPP access network provided by an embodiment of the present disclosure. As shown in Fig. 30, the apparatus 3000 may be arranged at an AMF side, and the apparatus 3000 may include:
a receiving module 3001 configured to, according to a registration operation performed by a terminal, receive at least one of a registration type, a user identifier and an identifier of a non-public network, that the terminal needs to register with, corresponding to the registration operation and sent by a N3IWF, when the terminal accesses the 3GPP network via an untrusted non-3GPP access network.

To sum up, in the authentication apparatus for accessing the 3GPP network via the non-3GPP access network in these embodiments of the present disclosure, when the terminal accesses the 3GPP network via the untrusted non-3GPP access network, the receiving module receives the at least one of the registration type, the user identifier and the identifier of the non-public network, that the terminal needs to register with, corresponding to the registration operation and sent by the N3IWF, according to the registration operation performed by the terminal. In these embodiments of the present disclosure, according to the registration operation performed by the terminal, information corresponding to the registration operation and sent by the N3IWF is received, which reduces the mismatch between the received information and the registration operation performed by the terminal, improves the accuracy of authentication of accessing the 3GPP network via the non-3GPP access network, and enables the terminal to access the 3GPP network via the non-3GPP access network. The present disclosure provides a processing apparatus for the case of "authentication of accessing the 3GPP network via the non-3GPP access network", so as to receive the information corresponding to the registration operation and sent by the N3IWF according to the registration operation performed by the terminal, which may improve the accuracy of authentication of accessing the 3GPP network via the non-3GPP access network.

Optionally, in an embodiment of the present disclosure, when receiving the user identifier corresponding to the registration operation and sent by the N3IWF according to the registration operation performed by the terminal, the receiving module 3001 is specifically configured to:
in response to that the registration operation performed by the terminal is an SNPN onboarding registration, receive at least one of following user identifiers sent by the N3IWF:
an onboarding SUCI; and
an onboarding SUPI.

Optionally, in an embodiment of the present disclosure, when receiving the user identifier corresponding to the registration operation and sent by the N3IWF according to the registration operation performed by the terminal, the receiving module 3001 is specifically configured to:
in response to that the registration operation is an initial registration or a mobile registration update, receive at least one of following user identifiers sent by the N3IWF:
an SUCI; and
an SUPI.

Optionally, in an embodiment of the present disclosure, when receiving the registration type corresponding to the registration operation and sent by the N3IWF according to the registration operation performed by the terminal, the receiving module 3001 is specifically configured to perform at least one of:
in response to that the registration operation performed by the terminal is performing an SNPN onboarding registration, receiving a registration type sent by the N3IWF, in which the registration type is SNPN Onboarding;
in response to that the registration operation performed by the terminal is performing an initial registration, receiving a registration type sent by the N3IWF, in which the registration type is Initial Registration; and
in response to that the registration operation performed by the terminal is performing a mobile registration update, receiving a registration type sent by the N3IWF, in which the registration type is Mobile Registration Update.

Optionally, in an embodiment of the present disclosure, the receiving module 3001 is further configured to:
apply AMF configuration data configured locally to onboarding, in which the AMF configuration data is used to limit a network application of the terminal to onboarding only; and
store indication information in a context of the terminal in the AMF, in which the indication information is used to indicate that the terminal has completed onboarding registration.

Optionally, in an embodiment of the present disclosure, the receiving module 3001 is further configured to:
based on an ON-SNPN policy, start a timer for realizing specific logout, in which the timer is configured for onboarding of the terminal.

Optionally, in an embodiment of the present disclosure, when receiving the user identifier corresponding to the registration operation and sent by the N3IWF according to the performed registration operation, the receiving module 3001 is specifically configured to:
in a non-public network (NPN) scenario, in response to that an extensible authentication protocol (EAP) method supports SUPI privacy, receive an anonymous SUCI sent by the N3IWF, in which the anonymous SUCI is an anonymous SUCI sent by the terminal to the N3IWF according to configuration information of the terminal.

Optionally, in an embodiment of the present disclosure, the anonymous SUCI is an anonymous SUCI obtained by ignoring a username part in an original SUCI.

Optionally, in an embodiment of the present disclosure, the anonymous SUCI is an anonymous SUCI obtained by setting a username part in an original SUCI to anonymous.

Optionally, in an embodiment of the present disclosure, the receiving module 3001 is further configured to:
authenticate the terminal in at least one of following authentication methods:
a 5G AKA authentication method;
an EAP-AKA' authentication method; and
a key-generating EAP authentication method.

Optionally, in an embodiment of the present disclosure, the receiving module 3001 is further configured to:
receive a security anchor function (SEAF) key (K_{SEAF}), an SUPI, an SUCI and/or an SUCI generation algorithm sent by an AUSF;
generate an AMF key (K_{AMF}) according to the K_{SEAF} and the SUPI; and
generate a N3IWF key (K_{N3IWF}) according to the K_{AMF}, and store mapping relationships among the SUPI, the SUCI and the K_{N3IWF}.

Optionally, in an embodiment of the present disclosure, the receiving module 3001 is further configured to:
send at least one K_{N3IWF}, at least one SUCI and at least one SUCI generation algorithm to the N3IWF.

Optionally, in an embodiment of the present disclosure, the receiving module 3001 is further configured to:
receive an SUCI sent by the N3IWF, in which the SUCI is an SUCI which is sent by the terminal to the N3IWF, and a K_{N3IWF} corresponding to which has not been determined by the N3IWF;
send the SUCI to an authentication service function (AUSF);
receive an SUPI sent by the AUSF for the SUCI, and determining the K_{N3IWF} corresponding to the SUCI according to the SUPI; and
send the K_{N3IWF} corresponding to the SUCI to the N3IWF.

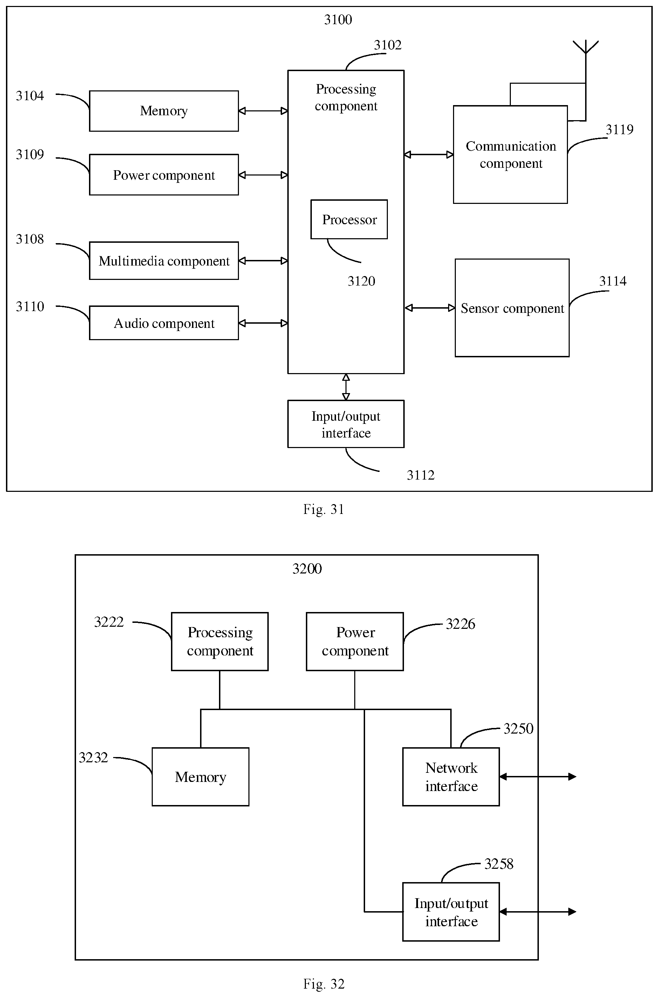

Fig. 31 is a block diagram of a terminal 3100 (e.g., user equipment (UE)) provided by an embodiment of the present disclosure. For example, the terminal 3100 may be a mobile phone, a computer, a digital broadcasting terminal, a messaging device, a game console, a tablet device, a medical device, a fitness device, a personal digital assistant, and the like.

Referring to Fig. 31, the terminal 3100 may include at least one of following components: a processing component 3102, a memory 3104, a power component 3106, a multimedia component 3108, an audio component 3110, an input/output (I/O) interface 3112, a sensor component 3114, and a communication component 3116.

The processing component 3102 generally controls the overall operation of the terminal 3100, such as operations associated with display, telephone call, data communication, camera operation and recording operation. The processing component 3102 may include at least one processor 3120 to execute instructions to complete all or part of the steps of the methods described above. In addition, the processing component 3102 may include at least one module to facilitate interaction between the processing component 3102 and other components. For example, the processing component 3102 may include a multimedia module to facilitate interaction between the multimedia component 3108 and the processing component 3102.

The memory 3104 is configured to store various types of data to support operations at the terminal 3100. Examples of these data include instructions for any application or method operating on the terminal 3100, contact data, phone book data, messages, pictures, videos, and the like. The memory 3104 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 3106 provides power to various components of the terminal 3100. The power component 3106 may include a power management system, at least one power supply, and other components associated with generating, managing and distributing power for the terminal 3100.

The multimedia component 3108 includes a screen providing an output interface between the terminal 3100 and the user. In some embodiments, the screen may include a liquid crystal display (LCD) and a touch panel (TP). If the screen includes the touch panel, the screen may be implemented as a touch screen to receive an input signal from the user. The touch panel includes at least one touch sensor to sense touch, sliding and gestures on the touch panel. The touch sensor may not only sense the boundary of a touch or sliding action, but also detect a wake-up time and pressure related to the touch or sliding action. In some embodiments, the multimedia component 3108 includes a front camera and/or a rear camera. When the terminal 3100 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 3110 is configured to output and/or input audio signals. For example, the audio component 3110 includes a microphone (MIC) configured to receive external audio signals when the terminal 3100 is in operation modes, such as a call mode, a recording mode and a voice recognition mode. The received audio signal may be further stored in the memory 3104 or transmitted via the communication component 3116. In some embodiments, the audio component 3110 further includes a speaker for outputting audio signals.

The I/O interface 3112 provides an interface between the processing component 3102 and peripheral interface modules, which may be a keyboard, a click wheel, a button, etc. The button may include, but is not limited to, a home button, a volume button, a start button and a lock button.

The sensor component 3114 includes at least one sensor for providing the terminal 3100 with various aspects of state evaluation. For example, the sensor component 3114 may detect the on/off state of the terminal 3100, the relative positioning of components, such as the display and the keypad of the terminal 3100, the position change of the terminal 3100 or a component of the terminal 3100, the presence or absence of the user's contact with the terminal 3100, the orientation or acceleration/deceleration of the terminal 3100 and the temperature change of the terminal 3100. The sensor assembly 3114 may include a proximity sensor configured to detect the presence of a nearby object without any physical contact. The sensor assembly 3114 may also include an optical sensor, such as a CMOS or CCD image sensor, for use in imaging applications. In some embodiments, the sensor assembly 3114 may further include an acceleration sensor, a gyro sensor, a magnetic sensor, a pressure sensor or a temperature sensor.

The communication component 3116 is configured to facilitate wired or wireless communication between the terminal 3100 and other devices. The terminal 3100 may access a wireless network based on communication standards, such as WiFi, 2G or 3G, or a combination thereof. In an illustrative embodiment, the communication component 3116 receives a broadcast signal or broadcast related information from an external broadcast management system via a broadcast channel. In an illustrative embodiment, the communication component 3116 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the terminal 3100 may be implemented by at least one application specific integrated circuit (ASIC), digital signal processor (DSP), digital signal processing device (DSPD), programmable logic device (PLD), field programmable gate array (FPGA), controller, microcontroller, microprocessor or other electronic components, for performing the above methods.

Fig. 32 is a block diagram of a network device 3200 provided by an embodiment of the present disclosure. For example, the network device 3200 may be provided as a network device. Referring to Fig. 32, the network device 3200 includes a processing component 3222, which further includes at least one processor, and memory resources represented by a memory 3232, for storing instructions executable by the processing component 3222, such as application programs. The application programs stored in the memory 3232 may include one or more modules each corresponding to a set of instructions. In addition, the processing component 3222 is configured to execute instructions to execute any of the aforementioned methods applied to the network device, for example, the method shown in Fig. 8.

The network device 3200 may further include a power component 3230 configured to perform power management of the network device 3200, a wired or wireless network interface 3250 configured to connect the network device 3200 to a network, and an input/output (I/O) interface 3258. The network device 3200 may operate based on an operating system stored in the memory 3232, such as Windows Server TM, Mac OS XTM, Unix TM, Linux TM, Free BSDTM or the like.

In the above embodiments provided by the present disclosure, the methods provided by the embodiments of the present disclosure are introduced from the perspectives of the network device and the UE respectively. In order to realize the functions in the methods provided by the embodiments of the present disclosure, the network device and the UE may include hardware structures and software modules, and realize the above functions in the form of hardware structures, software modules, or hardware structures plus software modules. A certain one of the above functions may be implemented by means of a hardware structure, a software module, or a combination of a hardware structure and a software module.

In the above embodiments provided by the present disclosure, the methods provided by the embodiments of the present disclosure are introduced from the perspectives of the network device and the UE respectively. In order to realize the functions in the methods provided by the embodiments of the present disclosure, the network device and the UE may include hardware structures and software modules, and realize the above functions in the form of hardware structures, software modules, or hardware structures plus software modules. A certain one of the above functions may be implemented by means of a hardware structure, a software module, or a combination of a hardware structure and a software module.

An embodiment of the present disclosure provides a communication device. The communication device may include a transceiving module and a processing module. The transceiving module may include a sending module and/or a receiving module, the sending module is used for realizing the sending function, and the receiving module is used for realizing the receiving function, so that the transceiving module may realize the sending function and/or the receiving function.

The communication device may be a terminal (such as the terminal in the aforementioned method embodiments), an apparatus in the terminal, or an apparatus that may be used in match with the terminal. Alternatively, the communication device may be a network device, an apparatus in the network device, or an apparatus that may be used in match with the network device.

An embodiment of the present disclosure provides another communication device. The communication device may be a network device or a terminal (such as the terminal in the aforementioned method embodiments), may be a chip, a chip system, or a processor that supports the network device to realize the above methods, or may be a chip, a chip system, or a processor that supports the terminal to realize the above methods. The device may be used to realize the methods described in the above method embodiments, and for details, reference may be made to the descriptions in the above method embodiments.

The communication device may include one or more processors. The processor may be a general-purpose processor or a special-purpose processor, etc., for example, a baseband processor or a central processor. The baseband processor may be used to process communication protocols and communication data, and the central processor may be used to control the communication device (such as a network device, a baseband chip, a terminal, a terminal chip, a DU or CU, etc.), to execute computer programs, and process data of computer programs.

Optionally, the communication device may further include one or more memories, on which a computer program may be stored, and the processor executes the computer program, so that the communication device may execute the methods described in the above method embodiments. Optionally, the memory may also store data. The communication device and the memory may be arranged separately or integrated together.

Optionally, the communication device may also include a transceiver and an antenna. The transceiver may be called a transceiving unit, a transceiver, or a transceiving circuit, etc., which is used to realize a transceiving function. The transceiver may include a receiver and a transmitter, the receiver may be called a receiving machine or a receiving circuit, etc., for realizing the receiving function, and the transmitter may be called a transmitting machine or a transmitting circuit, etc., for realizing the transmitting function.

Optionally, one or more interface circuits may be included in the communication device. The interface circuit is used to receive code instructions and transmit them to the processor. The processor executes the code instructions to cause the communication device to perform the methods described in the above method embodiments.

The communication device is a terminal (such as the terminal in the aforementioned method embodiments), and the processor is used to execute the method shown in any one of Figs. 2-9.

The communication device is a N3IWF, and the processor is used to execute the method shown in any one of Figs. 10-17.

The communication device is an AMF, and the processor is used to execute the method shown in any one of Figs. 18-26.

In an implementation, the processor may include a transceiver for realizing receiving and transmitting functions. For example, the transceiver may be a transceiving circuit, or an interface, or an interface circuit. The transceiving circuits, interfaces or interface circuits for realizing the receiving and transmitting functions may be separated or integrated. The transceiving circuit, interface or interface circuit may be used for reading and writing codes/data, or the transceiving circuit, interface or interface circuit may be used for signal transmission or transfer.

In an implementation, the processor may store a computer program, and the computer program is run on the processor, so that the communication device may execute the methods described in the above method embodiments. The computer program may be embedded in the processor, in which case the processor may be implemented by hardware.

In an implementation, the communication device may include a circuit, which may realize the function of sending or receiving or communicating in the aforementioned method embodiments. The processor and transceiver described in present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and transceiver may also be manufactured by various IC process technologies, such as complementary metal oxide semiconductor (CMOS), negative channel metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be the network device or the terminal (such as the terminal in the aforementioned method embodiments), but the scope of the communication device described in present disclosure is not limited to this, and the structure of the communication device may be unlimited. The communication device may be a standalone device or may be part of a large device. For example, the communication device may be:
(1) an independent integrated circuit (IC), or a chip, or a chip system or subsystem;
(2) a set of one or more ICs, optionally, the IC set may also include storage components for storing data and computer programs;
(3) an ASIC, such as a modem;
(4) a module that may be embedded in another device;
(5) a receiver, a terminal, an intelligent terminal, a cellular phone, a wireless device, a handset, a mobile unit, a vehicle-mounted device, a network device, a cloud device, an artificial intelligence device, etc;
(6) others and so on.

In the case that the communication device may be a chip or a chip system, the chip includes a processor and an interface. One or more processors may be provided, and multiple interfaces may be provided.

Optionally, the chip also includes a memory for storing necessary computer programs and data.

Those skilled in the art may also understand that various illustrative logical blocks and steps listed in the embodiments of the present disclosure may be implemented by electronic hardware, computer software, or a combination of both. Whether this function is realized by hardware or software depends on the specific application and the design requirements of the whole system. Those skilled in the art may use various methods to realize the described functions for each specific application, but this realization should not be understood as beyond the scope of protection of the embodiments of the present disclosure.

The present disclosure also provides a readable storage medium on which instructions are stored, which, when executed by a computer, realize the functions of any of the above method embodiments.

The present disclosure also provides a computer program product which, when executed by a computer, realizes the functions of any of the above method embodiments.

The above embodiments may be realized wholly or partially by software, hardware, firmware or any combination thereof. When implemented by software, it may be wholly or partially implemented in the form of a computer program product. The computer program product includes one or more computer programs. When the computer program is loaded and executed on the computer, the flow or function according to the embodiment of the present disclosure is generated wholly or partially. The computer may be a general-purpose computer, a special-purpose computer, a computer network, or other programmable devices. The computer program may be stored in a computer-readable storage medium or transmitted from a computer-readable storage medium to another computer-readable storage medium. For example, the computer program may be transmitted from a website, computer, server or data center to another website, computer or data center by in a wired manner (such as a coaxial cable, an optical fiber, a digital subscriber line (DSL)) or in a wireless manner (such as infrared, wireless, microwave, etc.). The computer-readable storage medium may be any available medium that the computer may access or a data storage device such as a server, a data center and the like that contains one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

It may be understood by those skilled in the art that first, second and other numerical numbers involved in the present disclosure are only for the convenience of description, but are not used to limit the scope of the embodiments of the present disclosure, and also not to indicate a sequential order.

The term "at least one" in the present disclosure may also be described as one or more, and the term "a plurality of" in the present disclosure may be two, three, four or more, which is not limited in the present disclosure. In the embodiments of the present disclosure, for a technical feature, technical features in this technical feature are distinguished by "first", "second", "third", "A", "B", "C" and "D", and the technical features described by "first", "second", "third", "A", "B", "C" and "D" have no sequential or size order.

Other embodiments of the present disclosure will easily occur to those skilled in the art after considering the specification and practicing the invention disclosed herein. The present disclosure is intended to cover any variation, use or adaptation of the present disclosure, which follow the general principles of the present disclosure and includes common sense or common technical means in the related art not disclosed in present disclosure. The specification and embodiments are to be regarded as illustrative only, with the true scope and spirit of the present disclosure being indicated by the following claims.

It may be understood that the present disclosure is not limited to the precise structure described above and shown in the drawings, and various modifications and changes may be made without departing from the scope of the present disclosure. The scope of the present disclosure is limited only by the appended claims.

## Claims

1. An authentication method for accessing a 3rd generation partnership project (3GPP) network via a non-3GPP access network, performed by a terminal, and comprising:
in a case that the terminal accesses the 3GPP network via an untrusted non-3GPP access network, according to a performed registration operation, sending at least one of a registration type, a user identifier and an identifier of a non-public network, that the terminal needs to register with, corresponding to the registration operation to a non-3GPP interworking function (N3IWF).

2. The method according to claim 1, wherein sending the user identifier corresponding to the registration operation to the N3IWF according to the performed registration operation comprises:
in response to that the performed registration operation is a standalone non-public network (SNPN) onboarding registration, sending at least one of following user identifiers to the N3IWF:
an onboarding subscription concealed identifier (SUCI); or
an onboarding subscription permanent identifier (SUPI).

3. The method according to claim 1, wherein sending the user identifier corresponding to the registration operation to the N3IWF according to the performed registration operation comprises:
in response to that the performed registration operation is performing an initial registration or performing a mobile registration update, sending at least one of following user identifiers to the N3IWF:
an SUCI; or
an SUPI.

4. The method according to claim 1, wherein sending the registration type corresponding to the registration operation to the N3IWF according to the performed registration operation comprises at least one of:
in response to that the performed registration operation is performing an SNPN onboarding registration, sending a registration type to the N3IWF, in which the registration type is SNPN Onboarding;
in response to that the performed registration operation is performing an initial registration, sending a registration type to the N3IWF, in which the registration type is Initial Registration; or
in response to that the performed registration operation is performing a mobile registration update, sending a registration type to the N3IWF, in which the registration type is Mobile Registration Update.

5. The method according to claim 1, wherein sending the user identifier corresponding to the registration operation to the N3IWF according to the performed registration operation comprises:
in a non-public network (NPN) scenario, in response to that an extensible authentication protocol (EAP) method supports SUPI privacy, sending an anonymous SUCI to the N3IWF according to configuration information of the terminal.

6. The method according to claim 5, wherein the anonymous SUCI is an anonymous SUCI obtained by ignoring a username part in an original SUCI.

7. The method according to claim 5, wherein the anonymous SUCI is an anonymous SUCI obtained by setting a username part in an original SUCI to anonymous.

8. The method according to claim 5, further comprising:
receiving an SUCI generation algorithm sent by the N3IWF; and
generating an SUCI according to the SUCI generation algorithm, and sending the SUCI to the N3IWF.

9. The method according to claim 8, further comprising:
sending the SUCI to the N3IWF in response to not receiving the SUCI generation algorithm sent by the N3IWF.

10. An authentication method for accessing a 3GPP network via a non-3GPP access network, performed by a N3IWF, and comprising:
in a case that a terminal accesses the 3GPP network via an untrusted non-3GPP access network, according to a registration operation performed by the terminal, receiving at least one of a registration type, a user identifier and an identifier of a non-public network, that the terminal needs to register with, corresponding to the registration operation and sent by the terminal; and
sending the at least one of the registration type, the user identifier and the identifier of the non-public network, that the terminal needs to register with, corresponding to the registration operation to an access and mobility management function (AMF).

11. The method according to claim 10, wherein receiving the user identifier corresponding to the registration operation and sent by the terminal according to the registration operation performed by the terminal comprises:
in response to that the registration operation performed by the terminal is an SNPN onboarding registration, receiving at least one of following user identifiers sent by the terminal:
an onboarding SUCI; or
an onboarding SUPI.

12. The method according to claim 10, wherein receiving the user identifier corresponding to the registration operation and sent by the terminal according to the registration operation performed by the terminal comprises:
in response to that the registration operation is an initial registration or a mobile registration update, receiving at least one of following user identifiers sent by the terminal:
an SUCI; and
an SUPI.

13. The method according to claim 10, wherein receiving the registration type corresponding to the registration operation and sent by the terminal according to the registration operation performed by the terminal comprises at least one of:
in response to that the registration operation performed by the terminal is performing an SNPN onboarding registration, receiving a registration type sent by the terminal, in which the registration type is SNPN Onboarding;
in response to that the registration operation performed by the terminal is performing an initial registration, receiving a registration type sent by the terminal, in which the registration type is Initial Registration; or
in response to that the registration operation performed by the terminal is performing a mobile registration update, receiving a registration type sent by the terminal, in which the registration type is Mobile Registration Update.

14. The method according to claim 10, wherein receiving the user identifier corresponding to the registration operation and sent by the terminal according to the performed registration operation comprises:
in a non-public network (NPN) scenario, in response to that an extensible authentication protocol (EAP) method supports SUPI privacy, receiving an anonymous SUCI sent by the terminal according to configuration information of the terminal.

15. The method according to claim 14, wherein the anonymous SUCI is an anonymous SUCI obtained by ignoring a username part in an original SUCI.

16. The method according to claim 14, wherein the anonymous SUCI is an anonymous SUCI obtained by setting a username part in an original SUCI to anonymous.

17. The method according to claim 14, further comprising:
receiving at least one N3IWF key (K_{N3IWF}), at least one SUCI and/or at least one SUCI generation algorithm sent by the AMF; and
storing a mapping relationship between the at least one K_{N3IWF} and the at least one SUCI.

18. The method according to claim 17, further comprising:
sending an SUCI generation algorithm to the terminal;
receiving an SUCI sent by the terminal, where the SUCI is generated according to the SUCI generation algorithm;
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

19. The method according to claim 17, further comprising:
receiving an SUCI sent by the terminal in response to not sending an SUCI generation algorithm to the terminal;
determining a K_{N3IWF} corresponding to the SUCI according to the SUCI and the mapping relationship between the at least one K_{N3IWF} and the at least one SUCI; and
authenticating the terminal according to the K_{N3IWF} corresponding to the SUCI.

20. The method according to claim 18, further comprising:
receiving the SUCI sent by the terminal in response to not sending the SUCI generation algorithm to the terminal;
in a case that the K_{N3IWF} corresponding to the SUCI is not determined according to the SUCI and the mapping relationship between the at least one K_{N3IWF} and the at least one SUCI, sending the SUCI to the AMF;
receiving the K_{N3IWF} corresponding to the SUCI, determined according to the SUCI and sent by the AMF; and
authenticating the terminal according to the K_{N3IWF} corresponding to the SUCI.

21. An authentication method for accessing a 3GPP network via a non-3GPP access network, performed by an AMF, and comprising:
in a case that a terminal accesses the 3GPP network via an untrusted non-3GPP access network, according to a registration operation performed by the terminal, receiving at least one of a registration type, a user identifier and an identifier of a non-public network, that the terminal needs to register with, corresponding to the registration operation and sent by a N3IWF.

22. The method according to claim 21, wherein receiving the user identifier corresponding to the registration operation and sent by the N3IWF according to the registration operation performed by the terminal comprises:
in response to that the registration operation performed by the terminal is an SNPN onboarding registration, receiving at least one of following user identifiers sent by the N3IWF:
an onboarding SUCI; or
an onboarding SUPI.

23. The method according to claim 21, wherein receiving the user identifier corresponding to the registration operation and sent by the N3IWF according to the registration operation performed by the terminal comprises:
in response to that the registration operation is an initial registration or a mobile registration update, receiving at least one of following user identifiers sent by the N3IWF:
an SUCI; or
an SUPI.

24. The method according to claim 21, wherein receiving the registration type corresponding to the registration operation and sent by the N3IWF according to the registration operation performed by the terminal comprises at least one of:
in response to that the registration operation performed by the terminal is performing an SNPN onboarding registration, receiving a registration type sent by the N3IWF, in which the registration type is SNPN Onboarding;
in response to that the registration operation performed by the terminal is performing an initial registration, receiving a registration type sent by the N3IWF, in which the registration type is Initial Registration; or
in response to that the registration operation performed by the terminal is performing a mobile registration update, receiving a registration type sent by the N3IWF, in which the registration type is Mobile Registration Update.

25. The method according to claim 24, further comprising:
applying AMF configuration data configured locally to onboarding, wherein the AMF configuration data is configured to limit a network application of the terminal to onboarding only; and
storing indication information in a context of the terminal in the AMF, wherein the indication information is configured to indicate that the terminal has completed onboarding registration.

26. The method according to claim 24, further comprising:
based on an onboarding-SNPN (ON-SNPN) policy, starting a timer for realizing specific logout, wherein the timer is configured for onboarding of the terminal.

27. The method according to claim 21, wherein receiving the user identifier corresponding to the registration operation and sent by the N3IWF according to the performed registration operation comprises:
in a non-public network (NPN) scenario, in response to that an extensible authentication protocol (EAP) method supports SUPI privacy, receiving an anonymous SUCI sent by the N3IWF, wherein the anonymous SUCI is an anonymous SUCI sent by the terminal to the N3IWF according to configuration information of the terminal.

28. The method according to claim 27, wherein the anonymous SUCI is an anonymous SUCI obtained by ignoring a username part in an original SUCI.

29. The method according to claim 27, wherein the anonymous SUCI is an anonymous SUCI obtained by setting a username part in an original SUCI to anonymous.

30. The method according to claim 27, further comprising:
authenticating the terminal in at least one of following authentication methods:
a 5G authentication and key agreement (AKA) authentication method;
an EAP-authentication and key agreement prime (AKA') authentication method; and
a key-generating EAP authentication method.

31. The method according to claim 27, further comprising:
receiving a security anchor function (SEAF) key (K_{SEAF}), an SUPI, an SUCI and/or an SUCI generation algorithm sent by an authentication service function (AUSF);
generating an AMF key (K_{AMF}) according to the K_{SEAF} and the SUPI; and
generating a K_{N3IWF} according to the K_{AMF}, and storing mapping relationships among the SUPI, the SUCI and the K_{N3IWF}.

32. The method according to claim 31, further comprising:
sending at least one K_{N3IWF}, at least one SUCI and/or at least one SUCI generation algorithm to the N3IWF.

33. The method according to claim 31, further comprising:
receiving an SUCI sent by the N3IWF, wherein the SUCI is an SUCI which is sent by the terminal to the N3IWF, and a K_{N3IWF} corresponding to which has not been determined by the N3IWF;
sending the SUCI to the AUSF;
receiving an SUPI sent by the AUSF for the SUCI, and determining the K_{N3IWF} corresponding to the SUCI according to the SUPI; and
sending the K_{N3IWF} corresponding to the SUCI to the N3IWF.

34. An authentication apparatus for accessing a 3GPP network via a non-3GPP access network, arranged at a terminal side, and comprising:
a sending module configured to, according to a performed registration operation, send at least one of a registration type, a user identifier and an identifier of a non-public network, that the terminal needs to register with, corresponding to the registration operation to a N3IWF, in a case that a terminal accesses the 3GPP network via an untrusted non-3GPP access network.

35. An authentication apparatus for accessing a 3GPP network via a non-3GPP access network, arranged at a N3IWF side, and comprising:
a receiving module configured to, according to a registration operation performed by a terminal, receive at least one of a registration type, a user identifier and an identifier of a non-public network, that the terminal needs to register with, corresponding to the registration operation and sent by the terminal, in a case that the terminal accesses the 3GPP network via an untrusted non-3GPP access network; and
a sending module configured to send the at least one of the registration type, the user identifier and the identifier of the non-public network, that the terminal needs to register with, corresponding to the registration operation to an AMF.

36. An authentication apparatus for accessing a 3GPP network via a non-3GPP access network, arranged at an AMF side, and the device comprises:
a receiving module configured to, according to a registration operation performed by a terminal, receive at least one of a registration type, a user identifier and an identifier of a non-public network, that the terminal needs to register with, corresponding to the registration operation and sent by a N3IWF, in a case that the terminal accesses the 3GPP network via an untrusted non-3GPP access network.

37. A terminal, comprising a processor and a memory, wherein a computer program is stored in the memory, and the processor executes the computer program stored in the memory, to cause the terminal to perform the method according to any one of claims 1-9.

38. A N3IWF, comprising a processor and a memory, wherein a computer program is stored in the memory, and the processor executes the computer program stored in the memory, to cause the N3IWF to perform the method according to any one of claims 10-20.

39. An AMF, comprising a processor and a memory, wherein a computer program is stored in the memory, and the processor executes the computer program stored in the memory, to cause the AMF to perform the method according to any one of claims 21-33.

40. A communication device, comprising a processor and an interface circuit, wherein
the interface circuit is configured to receive code instructions and transmit the code instructions to the processor; and
the processor is configured to execute the code instructions to perform the method according to any one of claims 1 to 9 or the method according to any one of claims 10 to 20 or the method according to any one of claims 21 to 33.

41. A computer-readable storage medium, for storing instructions, when executed, cause the method according to any one of claims 1 to 9 or the method according to any one of claims 10 to 20 or the method according to any one of claims 21 to 33 to be realized.

42. A communication system, comprising:
a terminal configured to, according to a performed registration operation, send at least one of a registration type, a user identifier and an identifier of a non-public network, that the terminal needs to register with, corresponding the registration operation to a N3IWF, in a case that the terminal accesses a 3GPP network via an untrusted non-3GPP access network;
the N3IWF configured to, according to the registration operation performed by the terminal, receive the at least one of the registration type, the user identifier and the identifier of the non-public network, that the terminal needs to register with, corresponding to the registration operation and sent by the terminal, and send the at least one of the registration type, the user identifier and the identifier of the non-public network, that the terminal needs to register with, corresponding to the registration operation to an AMF; and
the AMF configured to, according to the registration operation performed by the terminal, receive the at least one of the registration type, the user identifier and the identifier of the non-public network, that the terminal needs to register with, corresponding to the registration operation and sent by the N3IWF.
